# EUROPEAN PATENT APPLICATION

(11) **EP 4 067 935 A1**
(43) Date of publication of application: **05.10.2022**
(21) Application number: 20894138.5
(22) Date of filing: 09.11.2020
(51) Int. Cl.: G01S 13/08, G01S 13/34, G01S 13/931

(54) **ELECTRONIC DEVICE, METHOD FOR CONTROLLING ELECTRONIC DEVICE, AND PROGRAM**

(30) Priority: 26.11.2019 JP 2019213556
(71) Applicant: Kyocera Corporation, Kyoto-shi Kyoto 612-8501 (JP)
(72) Inventor: MURAKAMI Youhei, Kyoto-shi, Kyoto 612-8501 (JP); NISHIKIDO Masamitsu, Kyoto-shi, Kyoto 612-8501 (JP); SAHARA Tooru, Kyoto-shi, Kyoto 612-8501 (JP); KAWAJI Satoshi, Kyoto-shi, Kyoto 612-8501 (JP); HOMMA Takuya, Kyoto-shi, Kyoto 612-8501 (JP); SATO Masayuki, Kyoto-shi, Kyoto 612-8501 (JP)
(74) Representative: Viering, Jentschura & Partner mbB Patent- und Rechtsanwälte
(86) International application number: PCT/JP2020/041751
(87) International publication number: WO 2021/106540

(57) **Abstract**

An electronic device includes a transmission antenna that transmits a transmission wave; a reception antenna that receives a reflected wave that is the transmission wave having been reflected; a control unit that detects an object that reflects the transmission wave, based on a transmission signal transmitted as the transmission wave and a reception signal received as the reflected wave; and a gain adjustment unit that adjusts a gain of the reception signal. The control unit performs control to transmit the transmission wave in at least two different modes. The gain adjustment unit adjusts the gain of the reception signal for each of the modes.

## Description

### Cross-Reference To Related Applications

This application claims priority from Japanese Patent Application No. 2019-213556 filed in Japan on November 26, 2019, the entire disclosure of which is incorporated herein by reference.

### Technical Field

The present disclosure relates to an electronic device, a method for controlling an electronic device, and a program.

### Background Art

For example, in fields such as automobile-related industries, a technology for measuring a distance or the like between a vehicle of interest and a predetermined object is regarded as important. Recently, various studies have been conducted particularly on a radar (Radio Detecting and Ranging) technology for measuring a distance or the like to an object such as an obstacle by transmitting a radio wave such as a millimeter wave and by receiving a reflected wave reflected off the object. Such a technology for measuring a distance or the like expectedly becomes more important in the future with progresses of a technology for assisting drivers in driving and an automated-driving-related technology for partially or entirely automating driving.

Various suggestions have been made in relation to a technology for detecting the presence of a predetermined object by receiving a reflected wave of a radio wave that has been transmitted and reflected off the object. For example, PTL 1 discloses a single-antenna transmissionreception radar that transmits a transmission wave and receives a reflected wave. In addition, for example, PTL 2 discloses an on-board radar device that detects an object whose reflected wave has a large amplitude and an object whose reflected wave has a small amplitude.

### Citation List

### Patent Literature

PTL 1: Japanese Unexamined Patent Application Publication No. 2004-294092
PTL 2: Japanese Unexamined Patent Application Publication No. 2014-2053

### Summary of Invention

In one embodiment, an electronic device includes a transmission antenna that transmits a transmission wave, a reception antenna that receives a reflected wave that is the transmission wave having been reflected, a control unit, and a gain adjustment unit.

The control unit detects an object that reflects the transmission wave, based on a transmission signal transmitted as the transmission wave and a reception signal received as the reflected wave.

The control unit performs control to transmit the transmission wave in at least two different modes.

The gain adjustment unit adjusts a gain of the reception signal for each of the modes.

In one embodiment, a method for controlling an electronic device includes
a step of transmitting a transmission wave from a transmission antenna;
a step of receiving, from a reception antenna, a reflected wave that is the transmission wave having been reflected;
a step of detecting an object that reflects the transmission wave, based on a transmission signal transmitted as the transmission wave and a reception signal received as the reflected wave; and
a step of adjusting a gain of the reception signal.

In the method, control is performed to transmit the transmission wave in at least two different modes.

In addition, in the method, the step of adjusting includes a step of adjusting the gain of the reception signal for each of the modes.

In one embodiment, a program causes an electronic device to execute:
a step of transmitting a transmission wave from a transmission antenna;
a step of receiving, from a reception antenna, a reflected wave that is the transmission wave having been reflected;
a step of detecting an object that reflects the transmission wave, based on a transmission signal transmitted as the transmission wave and a reception signal received as the reflected wave; and
a step of adjusting a gain of the reception signal.

The program causes the electronic device to perform a step of performing control to transmit the transmission wave in at least two different modes.

In addition, the program causes the electronic device to perform, in the step of adjusting, a step of adjusting the gain of the reception signal for each of the modes.

### Brief Description of Drawings

[Fig. 1] Fig. 1 is a diagram for describing how an electronic device according to one embodiment is used.
[Fig. 2] Fig. 2 is a functional block diagram schematically illustrating a configuration of the electronic device according to the one embodiment.
[Fig. 3] Fig. 3 is a diagram for describing a configuration of a transmission signal according to the one embodiment.
[Fig. 4] Fig. 4 is a diagram for describing object detection ranges of the electronic device according to the one embodiment.
[Fig. 5] Fig. 5 is illustrating an example of arrangement of transmission antennas and reception antennas in the electronic device according to the one embodiment.
[Fig. 6] Fig. 6 is a diagram illustrating another example of the arrangement of the transmission antennas and the reception antennas in the electronic device according to the one embodiment.
[Fig. 7] Fig. 7 is a diagram for describing a distance within which the electronic device according to one embodiment performs detection of an object.
[Fig. 8] Fig. 8 is a diagram illustrating an example of object detection ranges in respective modes of the electronic device according to the one embodiment.
[Fig. 9] Fig. 9 is a diagram illustrating an example of a relationship between an object detection distance and a relative received power of a reception signal in the electronic device according to the one embodiment.
[Fig. 10] Fig. 10 is a diagram for describing an example in which transmission signals of different modes are set in one frame of a transmission wave of the electronic device according to the one embodiment.
[Fig. 11] Fig. 11 is a diagram illustrating an example of specifications in respective modes of the electronic device according to the one embodiment.
[Fig. 12] Fig. 12 is a diagram for describing adjustment of a reception gain in the electronic device according to the one embodiment.
[Fig. 13] Fig. 13 is a diagram illustrating an example of a relative received power of a reception signal in each mode of the electronic device according to the one embodiment.
[Fig. 14] Fig. 14 is a flowchart for describing an operation of the electronic device according to the one embodiment.
[Fig. 15] Fig. 15 is a functional block diagram schematically illustrating another configuration of the electronic device according to the one embodiment.

### Description of Embodiments

It is beneficial if a target detection accuracy can be improved without increasing the cost of a device in a technology for detecting a predetermined object by receiving a reflected wave that is a transmitted transmission wave reflected off the object as in a radar described above. An object of the present disclosure is to provide an electronic device, a method for controlling an electronic device, and a program that can reduce the cost of the device and also improve target detection accuracy. According to one embodiment, an electronic device, a method for controlling an electronic device, and a program that can reduce the cost of the device and also improve target detection accuracy can be provided. One embodiment is described in detail below with reference to the drawings.

An electronic device according to one embodiment is mounted in a vehicle (mobility device) such as an automobile, for example, and thus is capable of detecting, as a target, a predetermined object located around the mobility device. Therefore, the electronic device according to the one embodiment is capable of transmitting a transmission wave to an area around the mobility device from a transmission antenna installed on the mobility device. The electronic device according to the one embodiment is also capable of receiving a reflected wave that is the reflected transmission wave, from a reception antenna installed on the mobility device. At least one of the transmission antenna and the reception antenna may be included in a radar sensor or the like installed on the mobility device, for example.

A configuration in which the electronic device according to the one embodiment is mounted in an automobile such as a passenger car is described below as a typical example. However, the mobility device in which the electronic device according to the one embodiment is mounted is not limited to an automobile. The electronic device according to the one embodiment may be mounted in various mobility devices such as an autonomous car, a bus, a truck, a motorcycle, a bicycle, a ship, an aircraft, an agricultural machine such as a tractor, a snowplow, a garbage truck, a police car, an ambulance, a fire engine, a helicopter, and a drone. The mobility device in which the electronic device according to the one embodiment is mounted is not necessarily limited also to a mobility device that moves by its own motive power. For example, the mobility device in which the electronic device according to the one embodiment is mounted may be a trailer towed by a tractor. The electronic device according to the one embodiment is capable of measuring a distance or the like between the sensor and a predetermined object when at least one of the sensor and the object is movable. The electronic device according to the one embodiment is also capable of measuring the distance or the like between the sensor and the object even when both the sensor and the object are stationary.

An example of how the electronic device according to the one embodiment detects an object is described first.

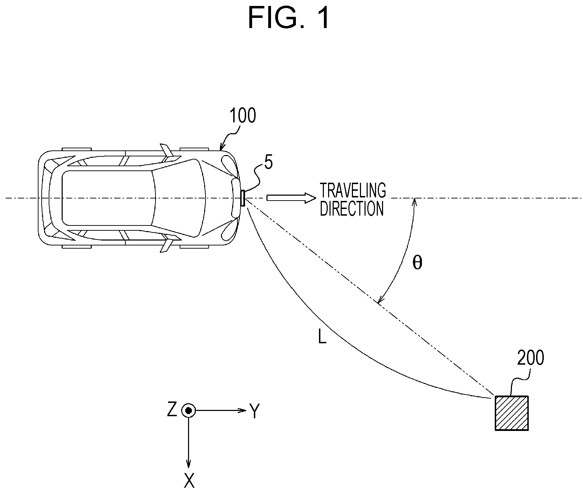

Fig. 1 is a diagram for describing how the electronic device according to the one embodiment is used. Fig. 1 illustrates an example in which a sensor including a transmission antenna and a reception antenna according to the one embodiment is installed on a mobility device.

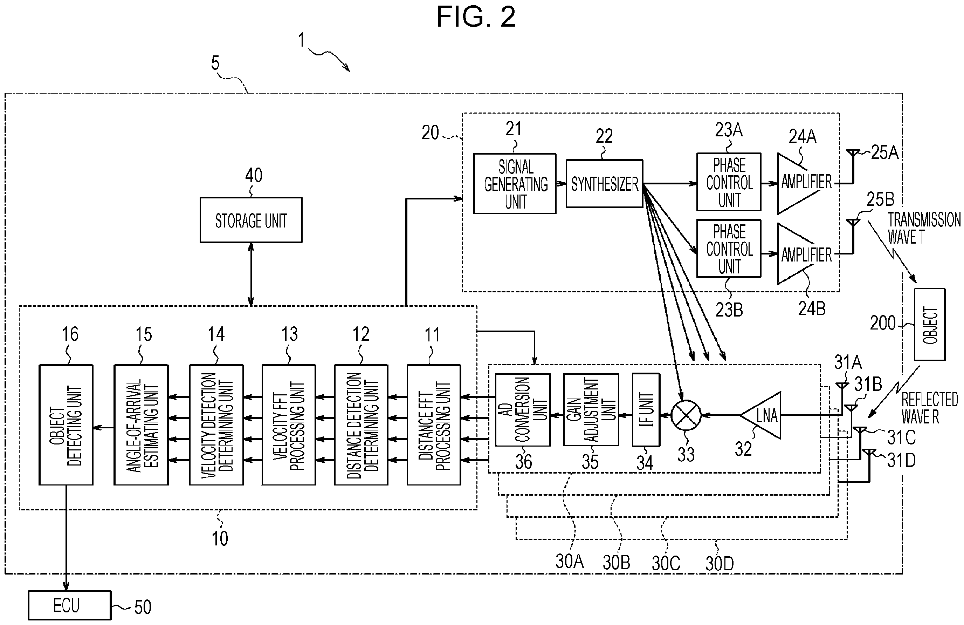

A sensor 5 including a transmission antenna and a reception antenna according to the one embodiment is installed on a mobility device 100 illustrated in Fig. 1. It is assumed that an electronic device 1 according to the one embodiment is also mounted (for example, built) in the mobility device 100 illustrated in Fig. 1. A specific configuration of the electronic device 1 is described later. The sensor 5 may include at least one of the transmission antenna and the reception antenna, for example. The sensor 5 may also appropriately include at least any of other functional units, such as at least part of a control unit 10 (Fig. 2) included in the electronic device 1. The mobility device 100 illustrated in Fig. 1 may be an automotive vehicle such as a passenger car but may be a mobility device of any type. In Fig. 1, the mobility device 100 may move (travel or slowly travel), for example, in a positive Y-axis direction (traveling direction) illustrated in Fig. 1 or in another direction, or may be stationary without moving.

As illustrated in Fig. 1, the sensor 5 including the transmission antenna is installed on the mobility device 100. In the example illustrated in Fig. 1, only one sensor 5 including the transmission antenna and the reception antenna is installed at a front portion of the mobility device 100. The position where the sensor 5 is installed on the mobility device 100 is not limited to the position illustrated in Fig. 1 and may be another appropriate position. For example, the sensor 5 illustrated in Fig. 1 may be installed on a left side, on a right side, and/or at a rear portion of the mobility device 100. The number of such sensors 5 may be any number equal to or greater than 1 depending on various conditions (or requirements) such as a range and/or an accuracy of measurement performed at the mobility device 100. The sensor 5 may be installed inside the mobility device 100. The inside the mobility device 100 may be, for example, a space inside a bumper, a space inside a body, a space inside a headlight, or a space such as a driver's space.

The sensor 5 transmits an electromagnetic wave as a transmission wave from the transmission antenna. For example, when a predetermined object (for example, an object 200 illustrated in Fig. 1) is located around the mobility device 100, at least part of the transmission wave transmitted from the sensor 5 is reflected off the object to become a reflected wave. For example, the reception antenna of the sensor 5 receives such a reflected wave. In this manner, the electronic device 1 mounted in the mobility device 100 can detect the object as the target.

The sensor 5 including the transmission antenna may be typically a radar (Radio Detecting and Ranging) sensor that transmits and receives a radio wave. However, the sensor 5 is not limited to a radar sensor. The sensor 5 according to the one embodiment may be, for example, a sensor based on the LIDAR (Light Detection and Ranging, Laser Imaging Detection and Ranging) technology that uses an optical wave. Each of these sensors can include, for example, a patch antenna. Since the technologies such as RADAR and LIDAR are already known, detailed description may be appropriately simplified or omitted.

The electronic device 1 mounted in the mobility device 100 illustrated in Fig. 1 receives, from the reception antenna, the reflected wave of the transmission wave transmitted from the transmission antenna of the sensor 5. In this manner, the electronic device 1 can detect, as the target, the predetermined object 200 located within a predetermined distance from the mobility device 100. For example, as illustrated in Fig. 1, the electronic device 1 can measure a distance L between the mobility device 100, which is a vehicle of interest, and the predetermined object 200. The electronic device 1 can also measure a relative velocity between the mobility device 100, which is the vehicle of interest, and the predetermined object 200. The electronic device 1 can further measure a direction (an angle of arrival θ) from which the reflected wave from the predetermined object 200 arrives at the mobility device 100, which is the vehicle of interest.

The object 200 may be, for example, at least any of an oncoming automobile traveling in a lane adjacent to a lane of the mobility device 100, an automobile traveling side by side with the mobility device 100, an automobile traveling in front of or behind the mobility device 100 in the same lane, and the like. The object 200 may also be any object located around the mobility device 100, such as a motorcycle, a bicycle, a stroller, a person such as a pedestrian, other forms of life such as an animal or an insect, a guardrail, a median strip, a road sign, a step on a sidewalk, a wall, a manhole, a structure such as a house, a building, or a bridge, or an obstacle. The object 200 may be in motion or stationary. For example, the object 200 may be an automobile or the like that is parked or stationary around the mobility device 100. In addition, the object 200 may be located not only on a road but also at an appropriate place such as on a sidewalk, in a farm, on a farmland, in a parking lot, in a vacant lot, in a space on a road, in a store, at a crossing, on the water, in the air, in a gutter, in a river, in another mobility device, in a building, inside or outside of other structures. In the present disclosure, the object detected by the sensor 5 may include living things such as a person, a dog, a cat, a horse, and other animals in addition to non-living things. The object detected by the sensor 5 in the present disclosure may include a target, which includes a person, an object, and an animal, to be detected with the radar technology.

In Fig. 1, a ratio between a size of the sensor 5 and a size of the mobility device 100 does not necessarily indicate an actual ratio. Fig. 1 illustrates the sensor 5 that is installed in an outer portion of the mobility device 100. However, in one embodiment, the sensor 5 may be installed at various positions of the mobility device 100. For example, in one embodiment, the sensor 5 may be installed inside a bumper of the mobility device 100 so as not to be seen in the appearance of the mobility device 100. In addition, the position where the sensor 5 is installed in the mobility device 100 may be either outside or inside of the mobility device 100. The inside of the mobility device 100 may be, for example, inside of the body of the mobility device 100, inside of the bumper, inside of a headlight, in a cabin space, or any combination of these.

Description is given below on the assumption that the transmission antenna of the sensor 5 transmits a radio wave in a frequency band, such as a millimeter wave (equal to or higher than 30 GHz) or a quasi-millimeter wave (for example, around 20 GHz to 30 GHz) as a typical example. For example, the transmission antenna of the sensor 5 may transmit a radio wave having a frequency bandwidth of 4 GHz such as from 77 GHz to 81 GHz.

Fig. 2 is a functional block diagram schematically illustrating an example of a configuration of the electronic device 1 according to the one embodiment. An example of the configuration of the electronic device 1 according to the one embodiment is described below.

When a distance or the like is measured by using a millimeter-wave radar, a frequency-modulated continuous wave radar (hereinafter, referred to as an FMCW radar) is often used. The FMCW radar sweeps a frequency of a to-be-transmitted radio wave to generate a transmission signal. Thus, a frequency of the radio wave used by such a millimeter-wave FMCW radar, which uses a radio wave of a frequency band of 79 GHz, for example, has a frequency bandwidth of 4 GHz such as from 77 GHz to 81 GHz, for example. The radar of the frequency bandwidth of 79 GHz has a characteristic that the usable frequency bandwidth is wider than that of another millimeter-wave and/or quasi-millimeter-wave radar of a frequency band of 24 GHz, 60 GHz, or 76 GHz, for example. Such an embodiment is described below as an example. The FMCW radar scheme used in the present disclosure may include an FCM scheme (Fast-Chirp Modulation) for transmitting chirp signals at a shorter period than usual. A signal generated by a signal generating unit 21 is not limited to a signal of the FM-CW scheme. The signal generated by the signal generating unit 21 may be a signal of various schemes other than the FM-CW scheme. A transmission signal sequence stored in a storage unit 40 may change in accordance with these various schemes. For example, in the case of a radar signal of the FM-CW scheme described above, a signal whose frequency increases for each time sample and a signal whose frequency decreases for each time sample may be used. More detailed description of the various schemes described above is omitted because known techniques can be appropriately employed.

As illustrated in Fig. 2, the electronic device 1 according to the one embodiment is constituted by the sensor 5 and an ECU (Electronic Control Unit) 50. The ECU 50 controls various operations of the mobility device 100. The ECU 50 may be constituted by at least one or more ECUs. The electronic device 1 according to the one embodiment includes the control unit 10. The electronic device 1 according to the one embodiment may also appropriately include another functional unit such as at least any of a transmission unit 20, reception units 30A to 30D, and the storage unit 40. As illustrated in Fig. 2, the electronic device 1 may include a plurality of reception units such as the reception units 30A to 30D. When the reception units 30A, 30B, 30C, and 30D are not distinguished from one another, the reception units 30A, 30B, 30C, and 30D are simply referred to as "reception units 30" below.

The control unit 10 may include a distance FFT processing unit 11, a distance detection determining unit 12, a velocity FFT processing unit 13, a velocity detection determining unit 14, an angle-of-arrival estimating unit 15, and an object detecting unit 16. These functional units included in the control unit 10 are further described later.

As illustrated in Fig. 2, the transmission unit 20 may include the signal generating unit 21, a synthesizer 22, phase control units 23A and 23B, amplifiers 24A and 24B, and transmission antennas 25A and 25B. When the phase control units 23A and 23B are not distinguished from each other, the phase control units 23A and 23B are simply referred to as "phase control units 23" below. When the amplifiers 24A and 24B are not distinguished from each other, the amplifiers 24A and 24B are simply referred to as "amplifiers 24" below. When the transmission antennas 25A and 25B are not distinguished from each other, the transmission antennas 25A and 25B are simply referred to as "transmission antennas 25" below.

As illustrated in Fig. 2, each of the reception units 30 may include a respective one of reception antennas 31A to 31D. When the reception antennas 31A, 31B, 31C, and 31D are not distinguished from one another, the reception antennas 31A, 31B, 31C, and 31D are simply referred to as "reception antennas 31" below. As illustrated in Fig. 2, each of the plurality of reception units 30 may include an LNA 32, a mixer 33, an IF unit 34, a gain adjustment unit 35, and an AD conversion unit 36. The reception units 30A to 30D may have the same and/or similar configuration. Fig. 2 schematically illustrates the configuration of only the reception unit 30A as a representative example.

The sensor 5 described above may include, for example, the transmission antennas 25 and the reception antennas 31. The sensor 5 may also appropriately include at least any of other functional units such as the control unit 10.

The control unit 10 included in the electronic device 1 according to the one embodiment is capable of controlling the individual functional units of the electronic device 1 and also controlling operations of the entire electronic device 1. To provide control and processing capabilities for executing various functions, the control unit 10 may include at least one processor, for example, a CPU (Central Processing Unit). The control unit 10 may be collectively implemented by one processor, may be implemented by some processors, or may be implemented by discrete individual processors. The processor may be implemented as one integrated circuit. The integrated circuit is also referred to as an IC. The processor may be implemented as a plurality of integrated circuits and discrete circuits connected to be able to perform communication. The processor may be implemented on the basis of various other known technologies. In the one embodiment, the control unit 10 may be configured as, for example, a CPU and a program executed by the CPU. The control unit 10 may appropriately include a memory required for operations of the control unit 10.

The storage unit 40 may store a program executed by the control unit 10, results of processing performed by the control unit 10, etc. The storage unit 40 may function as a work memory of the control unit 10. The storage unit 40 may be constituted by, for example, a semiconductor memory or a magnetic disk. However, the storage unit 40 is not limited to these, and can be any storage device. The storage unit 40 may be, for example, a storage medium such as a memory card inserted to the electronic device 1 according to the present embodiment. The storage unit 40 may be an internal memory of the CPU used as the control unit 10 as described above.

In the one embodiment, the storage unit 40 may store various parameters for setting a range in which an object is detected on the basis of a transmission wave T transmitted from each transmission antenna 25 and a reflected wave R received from each reception antenna 31.

In the electronic device 1 according to the one embodiment, the control unit 10 is capable of controlling at least one of the transmission unit 20 and the reception units 30. In this case, the control unit 10 may control at least one of the transmission unit 20 and the reception units 30, on the basis of various kinds of information stored in the storage unit 40. In the electronic device 1 according to the one embodiment, the control unit 10 may instruct the signal generating unit 21 to generate a signal or may control the signal generating unit 21 to generate a signal.

In accordance with control performed by the control unit 10, the signal generating unit 21 generates a signal (transmission signal) to be transmitted as the transmission wave T from each of the transmission antennas 25. When generating the transmission signal, the signal generating unit 21 may allocate a frequency of the transmission signal in accordance with control performed by the control unit 10, for example. Specifically, the signal generating unit 21 may allocate a frequency of the transmission signal in accordance with a parameter set by the control unit 10, for example. For example, the signal generating unit 21 receives frequency information from the control unit 10 or the storage unit 40 and generates a signal having a predetermined frequency in a frequency band such as from 77 GHz to 81 GHz, for example. The signal generating unit 21 may include a functional unit serving as a voltage control oscillator (VCO), for example.

The signal generating unit 21 may be configured as hardware having the function, as for example a microcomputer, or as for example a processor such as a CPU and a program or the like executed by the processor. Each functional unit described below may also be configured as hardware having the function, as for example a microcomputer if possible, or as for example a processor such as a CPU and a program or the like executed by the processor.

In the electronic device 1 according to the one embodiment, the signal generating unit 21 may generate a transmission signal (transmission chirp signal) such as a chirp signal, for example. In particular, the signal generating unit 21 may generate a signal (linear chirp signal) whose frequency changes linearly and periodically. For example, the signal generating unit 21 may generate a chirp signal whose frequency linearly and periodically increases from 77 GHz to 81 GHz as time elapses. For example, the signal generating unit 21 may generate a signal whose frequency periodically repeats a linear increase (upchirp) from 77 GHz to 81 GHz and a decrease (down-chirp) as time elapses. The signal generated by the signal generating unit 21 may be set in advance by the control unit 10, for example. The signal generated by the signal generating unit 21 may be stored in advance in the storage unit 40 or the like, for example. Since chirp signals used in a technical field such as the radar are known, more detailed description is appropriately simplified or omitted. The signal generated by the signal generating unit 21 is supplied to the synthesizer 22.

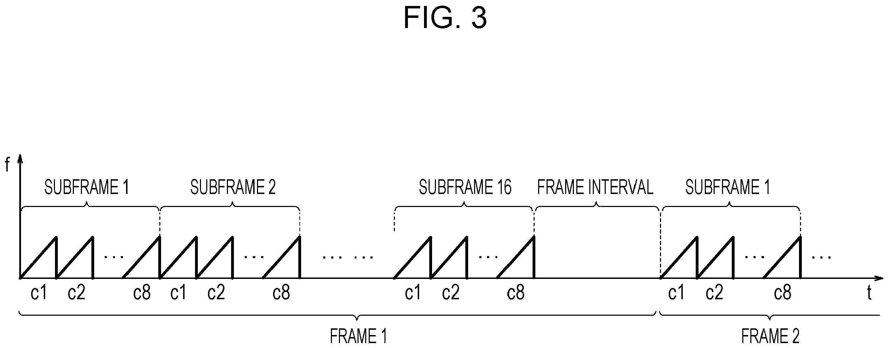

Fig. 3 is a diagram for describing an example of chirp signals generated by the signal generating unit 21.

In Fig. 3, the horizontal axis represents elapsed time, and the vertical axis represents a frequency. In the example illustrated in Fig. 3, the signal generating unit 21 generates linear chirp signals whose frequency changes linearly and periodically. In Fig. 3, the individual chirp signals are denoted by c1, c2, ..., c8. As illustrated in Fig. 3, the frequency of each chirp signal linearly increases as time elapses.

In the example illustrated in Fig. 3, eight chirp signals c1, c2, ..., c8 constitute one subframe. That is, each of subframes such as a subframe 1 and a subframe 2 illustrated in Fig. 3 includes eight chirp signals c1, c2, ..., c8. In the example illustrated in Fig. 3, 16 subframes such as the subframes 1 to 16 constitute one frame. That is, each of frames such as a frame 1 and a frame 2 illustrated in Fig. 3 includes 16 subframes. As illustrated in Fig. 3, a frame interval of a predetermined length may be included between frames. One frame illustrated in Fig. 3 may have a length of about 30 ms to 50 ms, for example.

In Fig. 3, the frame 2 and subsequent frames may have the same and/or similar configuration. In Fig. 3, the frame 3 and subsequent frames may have the same and/or similar configuration. In the electronic device 1 according to the one embodiment, the signal generating unit 21 may generate a transmission signal as any number of frames. In Fig. 3, an illustration of some chirp signals is omitted. As described above, a relationship between time and a frequency of the transmission signal generated by the signal generating unit 21 may be stored in the storage unit 40 or the like, for example.

As described above, the electronic device 1 according to the one embodiment may transmit a transmission signal constituted by subframes each including a plurality of chirp signals. The electronic device 1 according to the one embodiment may transmit a transmission signal constituted by frames each including a predetermined number of subframes.

Description is given below on the assumption that the electronic device 1 transmits a transmission signal having a frame structure illustrated in Fig. 3. However, the frame structure illustrated in Fig. 3 is an example. For example, the number of chirp signals included in one subframe is not limited to eight. In the one embodiment, the signal generating unit 21 may generate a subframe including any number (for example, a plurality) of chirp signals. A subframe structure illustrated in Fig. 3 is also an example. For example, the number of subframes included in one frame is not limited to 16. In the one embodiment, the signal generating unit 21 may generate a frame including any number (for example, a plurality) of subframes. The signal generating unit 21 may generate signals having different frequencies. The signal generating unit 21 may generate a plurality of discrete signals of bandwidths in which frequencies f are different from each other.

Referring back to Fig. 2, the synthesizer 22 increases the frequency of the signal generated by the signal generating unit 21 to a frequency in a predetermined frequency band. The synthesizer 22 may increase the frequency of the signal generated by the signal generating unit 21 to a frequency selected as a frequency of the transmission wave T to be transmitted from each of the transmission antennas 25. The frequency selected as the frequency of the transmission wave T to be transmitted from each of the transmission antennas 25 may be set by the control unit 10, for example. The frequency selected as the frequency of the transmission wave T to be transmitted from each of the transmission antennas 25 may be stored in the storage unit 40, for example. The signal whose frequency has been increased by the synthesizer 22 is supplied to the phase control unit 23 and the mixer 33. When the plurality of phase control units 23 are present, the signal whose frequency has been increased by the synthesizer 22 may be supplied to each of the plurality of phase control units 23. When the plurality of reception units 30 are present, the signal whose frequency has been increased by the synthesizer 22 may be supplied to the mixer 33 of each of the plurality of reception units 30.

Each of the phase control units 23 controls a phase of the transmission signal supplied from the synthesizer 22. Specifically, for example, in accordance with control performed by the control unit 10, each of the phase control units 23 may appropriately advance or delay the phase of the signal supplied from the synthesizer 22 to adjust the phase of the transmission signal. In this case, on the basis of a difference between paths of the transmission waves T to be transmitted from the plurality of transmission antennas 25, the phase control units 23 may adjust the phases of the respective transmission signals. The phase control units 23 appropriately adjust the phases of the respective transmission signals, so that the transmission waves T transmitted from the plurality of transmission antennas 25 enhance with each other in a predetermined direction to form a beam (beamforming). In this case, a correlation between a direction of beamforming and amounts of phase by which the respective transmission signals transmitted by the plurality of transmission antennas 25 are to be controlled may be stored in the storage unit 40, for example. The transmission signal whose phase is controlled by each of the phase control units 23 is supplied to a respective one of the amplifiers 24.

The amplifier 24 amplifies power (electric power) of the transmission signal supplied from the phase control unit 23 in accordance with control performed by the control unit 10, for example. When the sensor 5 includes the plurality of transmission antennas 25, each of the plurality of amplifiers 24 may amplify power (electric power) of the transmission signal supplied from a respective one of the plurality of phase control units 23 in accordance with control performed by the control unit 10, for example. Since the technology for amplifying power of a transmission signal is already known, more detailed description is omitted. Each of the amplifiers 24 is connected to a respective one of the transmission antennas 25.

The transmission antenna 25 outputs (transmits), as the transmission wave T, the transmission signal amplified by the amplifier 24. That is, the transmission antenna 25 may transmit the transmission wave T. When the sensor 5 includes the plurality of transmission antennas 25, each of the plurality of transmission antennas 25 may output (transmit), as the transmission wave T, the transmission signal amplified by a respective one of the plurality of amplifiers 24. Since the transmission antennas 25 can be configured in a manner that is the same as and/or similar to that of transmission antennas for use in the known radar technology, more detailed description is omitted.

The electronic device 1 according to the one embodiment includes the transmission antennas 25 and is capable of transmitting transmission signals (for example, transmission chirp signals) as the transmission waves T from the respective transmission antennas 25 in this manner. At least one of the functional units constituting the electronic device 1 may be housed in one housing. In this case, the one housing may have a hard-to-open structure. For example, the transmission antennas 25, the reception antennas 31, and the amplifiers 24 are desirably housed in one housing, and this housing desirably has a hard-to-open structure. When the sensor 5 is installed on the mobility device 100 such as an automobile, each of the transmission antennas 25 may transmit the transmission wave T to outside the mobility device 100 through a cover member such as a radar cover, for example. In this case, the radar cover may be made of a material, for example, a synthetic resin or rubber, that allows electromagnetic waves to pass therethrough. This radar cover may also serve as a housing of the sensor 5, for example. The transmission antennas 25 are covered with a member such as the radar cover, so that a risk of the transmission antennas 25 being damaged or malfunctioning because of a contact with an external object can be reduced. The radar cover and the housing may also be referred to as a radome.

Fig. 2 illustrates an example in which the electronic device 1 includes two transmission antennas 25. However, in the one embodiment, the electronic device 1 may include any number of transmission antennas 25. On the other hand, in the one embodiment, the electronic device 1 may include the plurality of transmission antennas 25 in the case where the transmission waves T transmitted from the respective transmission antennas 25 form a beam in a predetermined direction. In the one embodiment, the electronic device 1 may include a plurality of transmission antennas 25. In this case, the electronic device 1 may include the plurality of phase control units 23 and the plurality of amplifiers 24 to correspond to the plurality of transmission antennas 25. Each of the plurality of phase control units 23 may control the phase of a respective one of the plurality of transmission waves supplied from the synthesizer 22 and to be transmitted from the plurality of transmission antennas 25. Each of the plurality of amplifiers 24 may amplify power of a respective one of the plurality of transmission signals to be transmitted from the plurality of transmission antennas 25. In this case, the sensor 5 may include the plurality of transmission antennas. As described above, when the electronic device 1 illustrated Fig. 2 includes the plurality of transmission antennas 25, the electronic device 1 may include a plurality of functional units necessary for transmitting the transmission waves T from the plurality of transmission antennas 25.

The reception antenna 31 receives the reflected wave R. The reflected wave R may be the transmission wave T reflected off the predetermined object 200. That is, the reception antenna 31 may receive the reflected wave R that is the reflected transmission wave T. As the reception antenna 31, a plurality of antennas such as the reception antennas 31A to 31D, for example, may be included. Since the reception antennas 31 can be configured in a manner that is the same as and/or similar to that of reception antennas for use in the known radar technology, more detailed description is omitted. The reception antenna 31 is connected to the LNA 32. A reception signal based on the reflected wave R received by the reception antenna 31 is supplied to the LNA 32.

The electronic device 1 according to the one embodiment can receive, from each of the plurality of reception antennas 31, the reflected wave R that is the transmission wave T that has been transmitted as the transmission signal (transmission chirp signal) such as a chirp signal, for example, and has been reflected off the predetermined object 200. When the transmission chirp signal is transmitted as the transmission wave T in this manner, the reception signal based on the received reflected wave R is referred to as a reception chirp signal. That is, the electronic device 1 receives the reception signal (for example, the reception chirp signal) as the reflected wave R from each of the reception antennas 31. When the sensor 5 is installed on the mobility device 100 such as an automobile, each of the reception antennas 31 may receive the reflected wave R from outside the mobility device 100 through a cover member such as a radar cover, for example. In this case, the radar cover may be made of a material, for example, a synthetic resin or rubber, that allows electromagnetic waves to pass therethrough. This radar cover may also serve as a housing of the sensor 5, for example. The reception antennas 31 are covered with a member such as the radar cover, so that a risk of the reception antennas 31 being damaged or malfunctioning because of a contact with an external object can be reduced. The radar cover and the housing may also be referred to as a radome.

When the reception antennas 31 are installed near the transmission antennas 25, these may be collectively included in one sensor 5. That is, for example, one sensor 5 may include at least one transmission antenna 25 and at least one reception antenna 31. For example, one sensor 5 may include the plurality of transmission antennas 25 and the plurality of reception antennas 31. In such a case, one radar sensor may be covered with a cover member such as one radar cover, for example.

The LNA 32 amplifies, with low noise, the reception signal based on the reflected wave R received by the reception antenna 31. The LNA 32 may be a low-noise amplifier and amplifies, with low noise, the reception signal supplied from the reception antenna 31. The reception signal amplified by the LNA 32 is supplied to the mixer 33.

The mixer 33 mixes (multiplies) the reception signal having a radio frequency (RF) supplied from the LNA 32 and the transmission signal supplied from the synthesizer 22 to generate a beat signal. The beat signal obtained by the mixer 33 through mixing is supplied to the IF unit 34.

The IF unit 34 performs frequency conversion on the beat signal supplied from the mixer 33 to decrease the frequency of the beat signal to an intermediate frequency (IF). The beat signal whose frequency has been decreased by the IF unit 34 is supplied to the gain adjustment unit 35.

The gain adjustment unit 35 adjusts a gain of the beat signal obtained through frequency conversion by the IF unit 34. The gain adjustment unit 35 may adjust the gain of the signal on the basis of gain information stored in the storage unit 40, for example. The gain adjustment unit 35 may adjust the gain of the reception signal for each of a plurality of time sections in each frame of the transmission signal.

As described above, in the electronic device 1 according to the one embodiment, the gain adjustment unit 35f may adjust the gain of the reception signal. Adjustment of the gain of the reception signal performed by the gain adjustment unit 35 is further described later. The beat signal whose gain has been adjusted by the gain adjustment unit 35 is supplied to the AD conversion unit 36.

The AD conversion unit 36 digitizes the analog beat signal supplied from the gain adjustment unit 35. The AD conversion unit 36 may be constituted by any analog-to-digital conversion circuit (Analog to Digital Converter (ADC)). The digitized beat signal obtained by the AD conversion unit 36 is supplied to the distance FFT processing unit 11 of the control unit 10. In the case where there are the plurality of reception units 30, the digitized beat signals obtained by the plurality of AD conversion units 36 may be supplied to the distance FFT processing unit 11.

The distance FFT processing unit 11 estimates a distance between the mobility device 100 equipped with the electronic device 1 and the object 200 on the basis of the beat signals supplied from the respective AD conversion units 36. The distance FFT processing unit 11 may include a processing unit that performs fast Fourier transform, for example. In this case, the distance FFT processing unit 11 may be constituted by any circuit, any chip, or the like that performs fast Fourier transform (FFT). The distance FFT processing unit 11 may preform Fourier transform other than fast Fourier transform.

The distance FFT processing unit 11 performs FFT processing (hereinafter, appropriately referred to as "distance FFT processing") on the digitized beat signals obtained by the AD conversion units 36. For example, the distance FFT processing unit 11 may perform the FFT processing on a complex signal supplied from each of the AD conversion units 36. The digitized beat signal obtained by each of the AD conversion units 36 can be represented as a temporal change in signal intensity (power). The distance FFT processing unit 11 performs FFT processing on such a beat signal, so that the beat signal can be represented as a signal intensity (power) for each frequency. If a peak in a result obtained by the distance FFT processing is equal to or greater than a predetermined threshold, the distance FFT processing unit 11 may determine that the predetermined object 200 is located at the distance corresponding to the peak. For example, there is known a method for determining that an object (reflecting object) is present that reflects a transmission wave, when a peak value that is equal to or greater than a threshold is detected from the average power or amplitude of a disturbance signal, such as constant false alarm rate (CFAR)-based detection processing.

As described above, the electronic device 1 according to the one embodiment can detect, as the target, the object 200 that reflects the transmission wave T, on the basis of the transmission signal transmitted as the transmission wave T and the reception signal received as the reflected wave R. In the one embodiment, the operation described above may be performed by the control unit 10 of the electronic device 1.

The distance FFT processing unit 11 can estimate a distance to the predetermined object on the basis of one chirp signal (for example, c1 illustrated in Fig. 3). That is, the electronic device 1 can measure (estimate) the distance L illustrated in Fig. 1 by performing the distance FFT processing. Since a technique for measuring (estimating) a distance to a predetermined object by performing FFT processing on a beat signal is known, more detailed description is appropriately simplified or omitted. The results (for example, distance information) of the distance FFT processing performed by the distance FFT processing unit 11 may be supplied to the velocity FFT processing unit 13. The results of the distance FFT processing performed by the distance FFT processing unit 11 may also be supplied to the velocity FFT processing unit 13 and/or the object detecting unit 16, etc.

The distance detection determining unit 12 performs determination processing for a distance on the basis of the results of the distance FFT processing performed by the distance FFT processing unit 11. For example, specifically, the distance detection determining unit 12 may determine that an object is present at the distance if a peak in the results of the distance FFT processing performed by the distance FFT processing unit 11 is greater than or equal to a predetermined threshold. As described above, the distance detection determining unit 12 determines whether the target is detected at a predetermined distance.

The velocity FFT processing unit 13 estimates a relative velocity between the mobility device 100 equipped with the electronic device 1 and the object 200 on the basis of the beat signals on which the distance FFT processing has been performed by the distance FFT processing unit 11. The velocity FFT processing unit 13 may include a processing unit that performs fast Fourier transform, for example. In this case, the velocity FFT processing unit 13 may be configured by any circuit, any chip, or the like that performs fast Fourier transform (FFT) processing. The velocity FFT processing unit 13 may preform Fourier transform other than fast Fourier transform.

The velocity FFT processing unit 13 further performs FFT processing (hereinafter, appropriately referred to as "velocity FFT processing") on each beat signal on which the distance FFT processing has been performed by the distance FFT processing unit 11. For example, the velocity FFT processing unit 13 may perform the FFT processing on a complex signal supplied from the distance FFT processing unit 11. The velocity FFT processing unit 13 can estimate a relative velocity to the predetermined object on the basis of a subframe (for example, the subframe 1 illustrated in Fig. 3) including chirp signals. When the distance FFT processing is performed on the beat signal in the above-described manner, a plurality of vectors can be generated. The velocity FFT processing unit 13 can estimate a relative velocity to the predetermined object by determining a phase of a peak in a result of the velocity FFT processing performed on the plurality of vectors. That is, the electronic device 1 can measure (estimate) a relative velocity between the mobility device 100 and the predetermined object 200 illustrated in Fig. 1 by performing the velocity FFT processing. Since a technique for measuring (estimating) a relative velocity to a predetermined object by performing velocity FFT processing on a result of distance FFT processing is known, more detailed description is appropriately simplified or omitted. Results (for example, velocity information) of the velocity FFT processing performed by the velocity FFT processing unit 13 may be supplied to the velocity detection determining unit 14. The results of the velocity FFT processing performed by the velocity FFT processing unit 13 may also be supplied to the angle-of-arrival estimating unit 15 and/or the object detecting unit 16, etc.

The velocity detection determining unit 14 performs determination processing for a velocity on the basis of the results of the velocity FFT processing performed by the velocity FFT processing unit 13. For example, specifically, the velocity detection determining unit 14 may determine that an object is present at the velocity if a peak in the results of the velocity FFT processing performed by the velocity FFT processing unit 13 is greater than or equal to a predetermined threshold. As described above, the velocity detection determining unit 14 determines whether the target is detected at a predetermined velocity.

The angle-of-arrival estimating unit 15 estimates a direction from which the reflected wave R arrives from the predetermined object 200 on the basis of the result of the velocity FFT processing performed by the velocity FFT processing unit 13. The electronic device 1 can estimate the direction from which the reflected wave R arrives by receiving the reflected wave R from the plurality of reception antennas 31. For example, the plurality of reception antennas 31 are arranged at a predetermined interval. In this case, the transmission wave T transmitted from each of the transmission antennas 25 is reflected off the predetermined object 200 to become the reflected wave R. Each of the plurality of reception antennas 31 arranged at the predetermined interval receives the reflected wave R. The angle-of-arrival estimating unit 15 can estimate the direction from which the reflected wave R arrives at each of the plurality of reception antennas 31 on the basis of the phase of the reflected wave R received by the reception antenna 31 and a difference in path of the reflected wave R. That is, the electronic device 1 can measure (estimate) the angle of arrival θ illustrated in Fig. 1 on the basis of the result of the velocity FFT processing.

Various techniques for estimating the direction from which the reflected wave R arrives on the basis of a result of velocity FFT processing have been proposed. For example, MUSIC (MUltiple SIgnal Classification), ESPRIT (Estimation of Signal Parameters via Rotational Invariance Technique), and the like are known as known arriving direction estimation algorithms. Thus, more detailed description of the known techniques is appropriately simplified or omitted. Information (angle information) on the angle of arrival θ estimated by the angle-of-arrival estimating unit 15 may be supplied to the object detecting unit 16.

The object detecting unit 16 detects an object located in a range in which the transmission wave T is transmitted, on the basis of the information supplied from at least any of the distance FFT processing unit 11, the velocity FFT processing unit 13, and the angle-of-arrival estimating unit 15. The object detecting unit 16 may perform detection of an object by performing, for example, clustering processing on the basis of the supplied distance information, velocity information, and angle information. For example, DBSCAN (Density-based spatial clustering of applications with noise) or the like is known as an algorithm used in clustering of data. In the clustering processing, for example, average power of points constituting the detected object may be calculated. The distance information, the velocity information, the angle information, and the power information of the object detected by the object detecting unit 16 may be supplied to the ECU 50 or the like, for example. In this case, when the mobility device 100 is an automobile, communication may be performed using a communication interface such as a CAN (Controller Area Network), for example.

The ECU 50 included in the electronic device 1 according to the one embodiment is capable of controlling the functional units of the mobility device 100 and also controlling operations of the entire mobility device 100. To provide control and processing capabilities for executing various functions, the ECU 50 may include at least one processor, for example, a CPU (Central Processing Unit). The ECU 50 may be collectively implemented by one processor, may be implemented by some processors, or may be implemented by discrete individual processors. The processor may be implemented as one integrated circuit. The integrated circuit is also referred to as an IC. The processor may be implemented as a plurality of integrated circuits and discrete circuits connected to be able to perform communication. The processor may be implemented on the basis of various other known technologies. In the one embodiment, the ECU 50 may be configured as, for example, a CPU and a program executed by the CPU. The ECU 50 may appropriately include a memory required for operations of the ECU 50. At least part of the functions of the control unit 10 may be functions of the ECU 50, or at least part of the functions of the ECU 50 may be functions of the control unit 10.

The electronic device 1 illustrated in Fig. 2 includes the two transmission antennas 25 and the four reception antennas 31. However, the electronic device 1 according to the one embodiment may include any number of transmission antennas 25 and any number of reception antennas 31. For example, by including the two transmission antennas 25 and the four reception antennas 31, the electronic device 1 can be regarded to include a virtual antenna array that is virtually constituted by eight antennas. As described above, the electronic device 1 may receive the reflected wave R of 16 subframes illustrated in Fig. 3 by using, for example, the eight virtual antennas.

Target detection processing performed by the electronic device 1 according to the one embodiment is described next.

Examples of recent sensors capable of detecting an obstacle located around a vehicle such as an automobile include various sensors such as a millimeter-wave radar, a LiDAR (Light Detection and Ranging, Laser Imaging Detection and Ranging), or an ultrasonic sensor. Among these sensors, a millimeter-wave radar is often employed from the viewpoint of accuracy, reliability, and cost of obstacle detection.

Examples of techniques for detecting an obstacle or the like located around a vehicle by using a millimeter-wave radar include, for example, blind spot detection (BSD), cross traffic alert (CTA) during backward movement or exiting from a garage, and free space detection (FSD). In such detection, a radio wave radiation range that is dependent on a physical shape of an antenna of a millimeter wave radar is generally set in advance to determine an object detection range. That is, in each radar, the physical shape of the antenna of the millimeter-wave radar is generally determined in advance in accordance with the use purpose, function, or the like of the radar, and the specification of the object detection range is also generally defined in advance. Thus, a plurality of different radar sensors are needed to implement functions of a plurality of different radars.

However, preparing a plurality of radar sensors in accordance with the use purpose or function is disadvantageous from the viewpoint of cost. For example, if the physical shape of the antenna is determined in advance and the radiation range is also determined, it is difficult to change the use purpose and function of the antenna. For example, if the physical shape and the radiation range of the antenna are determined and all objects located within the radiation range are detected, an amount of information to be processed increases. In this case, since an unnecessary object may also be erroneously detected as a target object, the reliability of detection may decrease. For example, if the physical shape and the radiation range of the antenna are determined and the number of installed sensors is increased, the weight of the vehicle (mainly harness) increases to decrease fuel efficiency or the power consumption increases to decrease fuel efficiency. When detection is performed by using a plurality of radar sensors, a delay may occur between the sensors. Therefore, if automated driving, driving assist, or the like is performed on the basis of such detection, processing may take time. This is because a processing speed of the CAN is slower than an update rate of the radar, and feedback also takes time. When detection is performed by using a plurality of sensors having different object detection ranges, control may become complicated.

Accordingly, the electronic device 1 according to the one embodiment enables one radar sensor to be used for a plurality of functions or use purposes. The electronic device 1 according to the one embodiment enables one radar sensor to perform operations as if the one radar sensor simultaneously implemented the plurality of functions or use purposes.

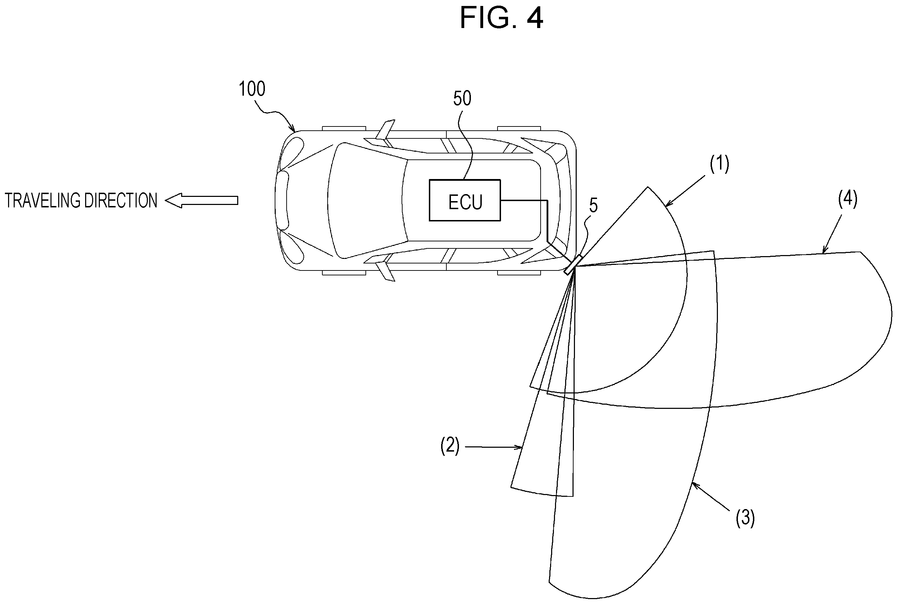

Fig. 4 is a diagram for describing an example of an operation of the electronic device 1 according to the one embodiment.

The electronic device 1 according to the one embodiment is mounted in the mobility device 100 illustrated in Fig. 4. As illustrated in Fig. 4, least one sensor 5 is installed at a left rear portion of the mobility device 100. As illustrated in Fig. 4, the sensor 5 is connected to the ECU 50 mounted in the mobility device 100. In the mobility device 100 illustrated in Fig. 4, the sensor 5 that operates in the same and/or similar manner as the sensor 5 installed at the left rear portion may be installed at a portion other than the left rear portion. In the following description, the one sensor 5 installed at the left rear portion alone is described, and description of the other sensors is omitted. In the following description, at least any of the control unit 10, the phase control units 23, and the ECU 50 can control each functional unit constituting the electronic device 1.

As illustrated in Fig. 4, the electronic device 1 according to the one embodiment is capable of detecting an object by selecting any of a plurality of detection ranges. The electronic device 1 according to the one embodiment is also capable of detecting an object by switching the detection range to any of the plurality of detection ranges. Fig. 4 illustrates ranges in which detection of an object is performed on the basis of a transmission signal transmitted by the electronic device 1 (specifically, the sensor 5) according to the one embodiment and a reception signal received by the electronic device 1 (specifically, the sensor 5).

For example, when the electronic device 1 according to the one embodiment is used for a use purpose or function for parking assist, for example, the electronic device 1 is capable of performing detection of an object in a range (1) illustrated in Fig. 4 serving as the object detection range. The object detection range (1) illustrated in Fig. 4 may be a range that is the same as or similar to an object detection range of a radar designed exclusively for parking assist, for example. For example, when the electronic device 1 according to the one embodiment is used for a use purpose or function for free space detection (FSD), for example, the electronic device 1 is capable of performing detection of an object in a range (2) illustrated in Fig. 4 serving as the object detection range. The object detection range (2) illustrated in Fig. 4 may be the same as or similar to an object detection range of a radar designed exclusively for free space detection (FSD), for example.

For example, when the electronic device 1 according to the one embodiment is used for a use purpose or function of exit collision detection (CTA), the electronic device 1 is capable of performing detection of an object in a range (3) illustrated in Fig. 4 serving as the object detection range. The object detection range (3) illustrated in Fig. 4 may be the same as or similar to an object detection range of a radar designed exclusively for exit collision detection (CTA), for example. For example, when the electronic device 1 according to the one embodiment is used for a use purpose or function of blind spot detection (BSD), the electronic device 1 is capable of performing detection of an object in a range (4) illustrated in Fig. 4 serving as the object detection range. The object detection range (4) illustrated in Fig. 4 may be the same as or similar to an object detection range of a radar designed exclusively for blind spot detection (BSD), for example.

The electronic device 1 according to the one embodiment is further capable of detecting an object by switching between a plurality of ranges, for example, the object detection ranges (1) to (4) illustrated in Fig. 4 in any manner. As described above, the plurality of ranges to be switched between in this case may be determined on the basis of, for example, an operation of a driver or the like of the mobility device 100, or may be determined on the basis of an instruction from the control unit 10, the ECU 50, or the like.

When the electronic device 1 according to the one embodiment performs detection of an object in the plurality of object detection ranges from among the object detection ranges (1) to (4) in this manner, the control unit 10 may determine the plurality of object detection ranges on the basis of any information. After determining the plurality of object detection ranges, the control unit 10 may set various parameters for transmitting transmission signals and receiving reception signals in the plurality of determined object detection ranges. The various parameters set by the control unit 10 may be stored in the storage unit 40, for example.

Such parameters may be determined on the basis of, for example, actual measurement performed in a test environment, before the electronic device 1 performs detection of an object. When such parameters are not stored in the storage unit 40, parameters appropriately estimated by the control unit 10 on the basis of predetermined data such as past measurement data may be used. When such parameters are not stored in the storage unit 40, the control unit 10 may acquire appropriate parameters by accessing an external device via a network, for example.

As described above, in the one embodiment, the control unit 10 detects an object that reflects the transmission wave T on the basis of the transmission signal transmitted as the transmission wave T and the reception signal received as the reflected wave R. In the one embodiment, the control unit 10 enables a plurality of object detection ranges (for example, the object detection ranges (1) to (4) in Fig. 4) based on the transmission signal and the reception signal to be changed.

In the one embodiment, the control unit 10 may further enable the plurality of object detection ranges to be switched between. For example, the control unit 10 that is performing detection of an object in the object detection range (3) may switch the range in which detection of an object is performed from the object detection range (3) to the object detection range (2). In the one embodiment, the control unit 10 may enable the plurality of object detection ranges to be changed in accordance with at least one of the use purpose and the function of object detection (such as parking assist (PA) and blind spot detection (BSD), for example). In the one embodiment, the control unit 10 may enable the plurality of object detection ranges to be changed as a short time elapses, as described later.

In the one embodiment, the control unit 10 may determine the plurality of object detection ranges on the basis of an object detection result. For example, when a predetermined object has already been detected through object detection, the control unit 10 may determine the plurality of object detection ranges in accordance with the location of the detected object. In the one embodiment, the control unit 10 may process only the transmission signal and the reception signal in any of the plurality of object detection ranges.

As described above, the electronic device 1 according to the one embodiment is capable of clipping (setting and/or switching) the detection range in object detection performed by using a millimeter-wave radar or the like, for example. Thus, the electronic device 1 according to the one embodiment is capable of flexibly coping with a situation in which detection of an object is desired in the plurality of object detection ranges. The electronic device 1 according to the one embodiment is capable of setting a wide object detection range in advance and clipping information only for a necessary detection range on the basis of information on a distance and/or an angle detected by the electronic device 1. Thus, the electronic device 1 according to the one embodiment can process information of the necessary detection range without increasing a processing load. Therefore, the electronic device 1 according to the one embodiment can improve the convenience in object detection.

The electronic device 1 according to the one embodiment enables the object detection range based on the transmission signal and the reception signal to be changed as illustrated in Fig. 4. The electronic device 1 may also direct a beam of the transmission waves T toward the object detection range. In this manner, the electronic device 1 according to the one embodiment can perform detection of an object in a desired clipping range with high accuracy.

For example, as described above, as the use purpose or function of blind spot detection (BSD), the electronic device 1 according to the one embodiment is capable of performing detection of an object by selecting the object detection range (4) from among the plurality of detection ranges illustrated in Fig. 4. The electronic device 1 according to the one embodiment may further form a beam (perform beamforming) of the transmission waves T transmitted from the plurality of transmission antennas 25 toward the direction of the object detection range (4). For example, when detection of a far object is performed, the object detection range can be covered with high accuracy by performing beamforming with the beam of the transmission waves transmitted from the plurality of transmission antennas 25 toward that direction.

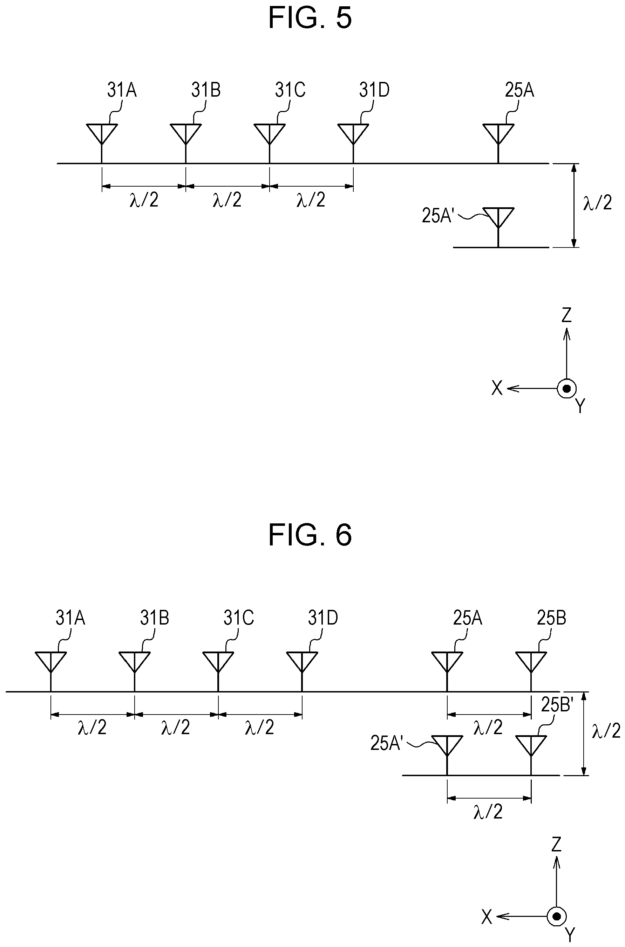

Figs. 5 and 6 are diagrams illustrating examples of arrangement of the transmission antennas and the reception antennas in the electronic device according to the one embodiment.

As illustrated in Fig. 5, the sensor 5 of the electronic device 1 according to the one embodiment may include, for example, two transmission antennas 25A and 25A'. As illustrated in Fig. 5, the sensor 5 of the electronic device 1 according to the one embodiment may include four reception antennas 31A, 31B, 31C, and 31D.

The four reception antennas 31A, 31B, 31C, and 31D are arranged in a horizontal direction (in an X-axis direction) at an interval of λ/2, where λ denotes a wavelength of the transmission wave T. By arranging the plurality of reception antennas 31 in the horizontal direction and receiving the transmission wave T with the plurality of reception antennas 31 in this manner, the electronic device 1 can estimate the direction from which the reflected wave R arrives. The wavelength λ of the transmission wave T may be a wavelength of the transmission wave T having a center frequency of 79 GHz when a frequency band of the transmission wave T is, for example, from 77 GHz to 81 GHz.

The two transmission antennas 25A and 25A' are arranged in a vertical direction (a Z-axis direction) at the interval of λ/2, where λ denotes the wavelength of the transmission wave T. By arranging the plurality of transmission antennas 25 in the vertical direction and transmitting the transmission waves T with the plurality of transmission antennas 25 in this manner, the electronic device 1 can change the direction of the beam of the transmission waves T in the vertical direction.

As illustrated in Fig. 6, the sensor 5 of the electronic device 1 according to the one embodiment may include, for example, four transmission antennas 25A, 25A', 25B, and 25B'.

As illustrated in Fig. 6, the two transmission antennas 25A and 25B are arranged in the horizontal direction (the X-axis direction) at the interval of λ/2, where λ denotes the wavelength of the transmission wave T. As illustrated in Fig. 6, the two transmission antennas 25A' and 25B' are arranged also in the horizontal direction (the X-axis direction) at the interval of λ/2, where λ denotes the wavelength of the transmission wave T. By arranging the plurality of transmission antennas 25 in the horizontal direction and transmitting the transmission waves T with the plurality of transmission antennas 25 in this manner, the electronic device 1 can change the direction of the beam of the transmission waves T also in the horizontal direction.

On the other hand, as illustrated in Fig. 6, the two transmission antennas 25A and 25A' are arranged in the vertical direction (the Z-axis direction) at the interval of λ/2, where λ denotes the wavelength of the transmission wave T. As illustrated in Fig. 6, the two transmission antennas 25B and 25B' are also arranged in the vertical direction (the Z-axis direction) at the interval of λ/2, where λ denotes the wavelength of the transmission wave T. Also in the arrangement illustrated in Fig. 6, by arranging the plurality of transmission antennas 25 in the vertical direction and transmitting the transmission wave T with the plurality of transmission antennas 25 in this manner, the electronic device 1 can change the direction of the beam of the transmission waves T in the vertical direction.

When the electronic device 1 according to the one embodiment performs beamforming of the transmission waves T transmitted from the plurality of transmission antennas 25, the plurality of transmission waves T may be set in phase in a predetermined direction on the basis of a difference between paths along which the transmission waves T are transmitted. In the electronic device 1 according to the one embodiment, in order to set the individual transmission waves T in phase in a predetermined direction, for example, the phase control units 23 may control the phase of at least one of the transmission waves transmitted from the plurality of transmission antennas 25.

An amount of phase to be controlled to set the plurality of transmission waves T in phase in a predetermined direction may be stored in the storage unit 40 in association with the predetermined direction. That is, a relationship between a direction of the beam and an amount of phase for beamforming may be stored in the storage unit 40.

Such a relationship may be determined on the basis of actual measurement performed in a test environment, for example, before the electronic device 1 performs detection of an object. When such a relationship is not stored in the storage unit 40, a relationship appropriately estimated by the phase control units 23 on the basis of predetermined data such as past measurement data may be used. When such a relationship is not stored in the storage unit 40, the phase control units 23 may acquire an appropriate relationship by connecting to an external device via a network, for example.

In the electronic device 1 according to the one embodiment, at least one of the control unit 10 and the phase control units 23 may perform control for performing beamforming of the transmission waves T transmitted from the plurality of transmission antennas 25. In the electronic device 1 according to the one embodiment, a functional unit including at least the phase control units 23 is also referred to as a transmission control unit.

As described above, in the electronic device 1 according to the one embodiment, the transmission antenna 25 may include a plurality of transmission antennas. In the electronic device 1 according to the one embodiment, the reception antenna 31 may also include a plurality of reception antennas. In the electronic device 1 according to the one embodiment, the transmission control unit (for example, the phase control units 23) may perform control such that the transmission waves T transmitted from the plurality of transmission antennas 25 form a beam in a predetermined direction (beamforming). In the electronic device 1 according to the one embodiment, the transmission control unit (for example, the phase control units 23) may form a beam in a direction toward the object detection range.

In the electronic device 1 according to the one embodiment, the transmission antennas 25 may include a plurality of transmission antennas 25 arranged to include a vertical direction component as described above. In this case, in the electronic device 1 according to the one embodiment, the phase control units 23 (transmission control unit) may change the direction of the beam to the direction toward the object detection range with the vertical direction component included.

In the electronic device 1 according to the one embodiment, the transmission antennas 25 may include a plurality of transmission antennas 25 arranged to include a horizontal direction component as described above. In this case, in the electronic device 1 according to the one embodiment, the phase control units 23 (transmission control unit) may change the direction of the beam to the direction toward the object detection range with the horizontal direction component included.

In the electronic device 1 according to the one embodiment, the transmission control unit (for example, the phase control units 23) may form a beam in a direction that covers at least part of the object detection range. In the electronic device 1 according to the one embodiment, the transmission control unit (for example, the phase control units 23) may control the phase of at least one of the plurality of transmission waves such that the transmission waves T each transmitted from a respective one of the plurality of transmission antennas 25 are in phase in a predetermined direction.

The electronic device 1 according to the one embodiment is capable of calculating a phase compensation value on the basis of frequency information of wide frequency band signals (for example, FMCW signals) output from the plurality of transmission antennas 25 and performing frequency-dependent phase compensation for each of the plurality of transmission antennas. Consequently, the electronic device 1 according to the one embodiment can perform, with high accuracy, beamforming in a particular direction in the entire frequency band which the transmission signal can have.

Such beamforming can extend an object detectable distance in a particular direction in which object detection is needed. The beamforming described above can reduce a reflected signal from an unnecessary direction. Therefore, the accuracy of detecting the distance and/or the angle can be improved.

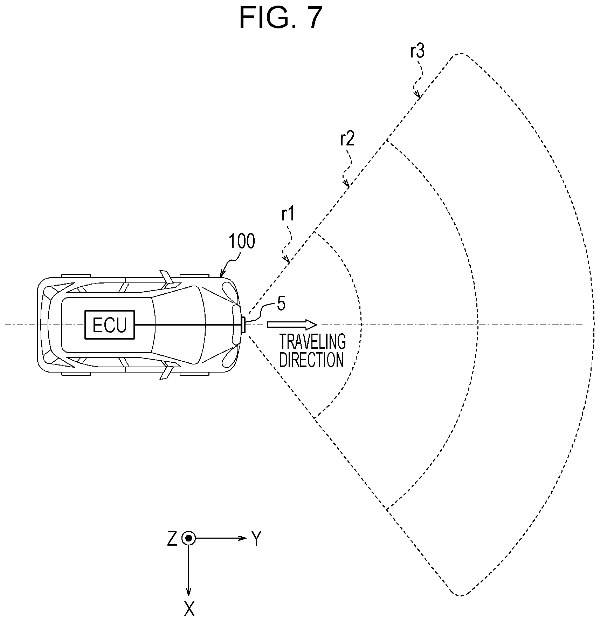

Fig. 7 is a diagram illustrating types of a detection distance of a radar implemented by the electronic device 1 according to the one embodiment.

As described above, the electronic device 1 according to the one embodiment is capable of clipping the object detection range and/or performing beamforming of the transmission waves. By employing at least one of clipping of the object detection range and beamforming of the transmission waves described above, the electronic device 1 is capable of defining a distance range in which an object is detectable on the basis of the transmission signal and the reception signal.

As illustrated in Fig. 7, the electronic device 1 according to the one embodiment is capable of performing detection of an object in a range r1, for example. The range r1 illustrated in Fig. 7 may be a range in which detection of an object can be performed by an ultra-short range radar (USRR), for example. As illustrated in Fig. 7, the electronic device 1 according to the one embodiment is also capable of performing detection of an object in a range r2, for example. The range r2 illustrated in Fig. 7 may be a range in which detection of an object can be performed by a short-range radar (SRR), for example. As illustrated in Fig. 7, the electronic device 1 according to the one embodiment is further capable of performing detection of an object in a range r3, for example. The range r3 illustrated in Fig. 7 may be a range in which detection of an object can be performed by a mid-range radar (MRR), for example. As described above, the electronic device 1 according to the one embodiment is capable of performing detection of an object by appropriately switching the range to any of the range r1, the range r2, and the range r3, for example. In such a radar having different detection distances, the distance measurement accuracy tends to decrease as the detection distance increases.

As described above, in the electronic device 1 according to the one embodiment, the control unit 10 may set the distance range in which detection of an object is performed on the basis of the transmission signal and the reception signal, in accordance with any of the plurality of object detection ranges.

Different modes of the transmission wave T transmitted in the electronic device 1 according to the one embodiment is described next.

In general, the signal intensity of a reception signal received as the reflected wave R that is the transmission wave T reflected off an object changes depending on the distance to the object to be detected. In general, the signal intensity of the reception signal received as the reflected wave R tends to decrease as the distance to the object to be detected increases. Conversely, the signal intensity of the reception signal received as the reflected wave R tends to increase as the distance to the object to be detected decreases. Thus, an object located at a relatively short distance and an object located at a relatively long distance are to be concurrently detected, the dynamic range of the reception signal becomes relatively wide. Accordingly, the dynamic range required for circuits (such as the AD conversion unit 36 and so on illustrated in Fig. 2, for example) that receive and process such a reception signal also becomes relatively wide. In general, increasing the dynamic range that can be processed by a circuit tends to lead to an increase in cost.

Accordingly, the electronic device 1 according to the one embodiment may configure each frame of the transmission signal to include at least two time sections. The electronic device 1 according to the one embodiment then may transmit the transmission wave in different modes in such time sections. As described below, the electronic device 1 according to the one embodiment transmits the transmission wave in different modes and adjusts the gain of the reception signal for each of the modes, so that the dynamic range of the reception signal does not become equal to or greater than a predetermined level. That is, the control unit 10 may control the mode by setting various parameters that define a transmission signal and a reception signal with which an object that reflects the transmission wave T as the reflected wave R is to be detected. That is, the control unit 10 may set various parameters for transmitting the transmission wave T from the transmission antenna 25 and various parameters for receiving the reflected wave R from the reception antenna 31. The control unit 10 may set a value of a change (slope) of the frequency of the chirp signal with respect to time and/or a sampling rate. That is, the distance range of the radar changes in accordance with the slope set by the control unit 10. In addition, the distance accuracy (distance resolution) changes in accordance with the sampling rate set by the control unit 10. In addition, a short-distance three-dimensional sensing mode and a two-dimensional beamforming mode can be switched between in accordance with the setting made by the control unit 10. The short-distance three-dimensional sensing mode enables three-dimensional sensing by switching between the antennas that are separate by a half wavelength in the vertical direction. The two-dimensional beamforming mode enables high-speed detection. The two-dimensional beamforming mode enables a beam to cover a long distance through beamforming. The two-dimensional beamforming mode can reduce unwanted peripheral interference by narrowing the beam. The control unit 10 may also set the mode by controlling the output, the phase, the amplitude, the frequency, the frequency range, or the like of the chirp signal.

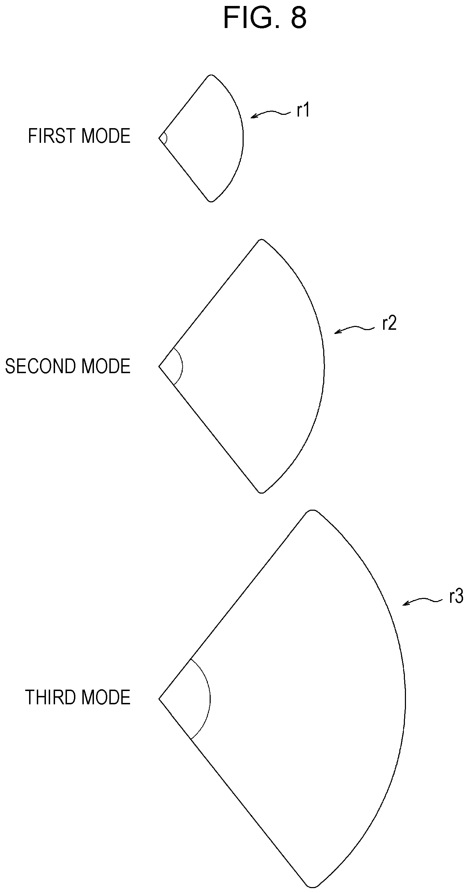

Fig. 8 is a diagram illustrating an example of object detection ranges in the respective modes. The object detection ranges r1, r2, and r3 illustrated in Fig. 8 may be the same as or different from the ranges r1, r2, and r3 illustrated in Fig. 7, respectively.

As illustrated in Fig. 8, the object detection range r1 may be a range in which detection of an object is performed in a first mode of the electronic device 1. Herein, the minimum detection range and the maximum detection range of the object detection range r1 may be, for example, 0.2 m and 12.5 m, respectively. In addition, as illustrated in Fig. 8, the object detection range r2 may be a range in which detection of an object is performed in a second mode of the electronic device 1. Herein, the minimum detection range and the maximum detection range of the object detection range r2 may be, for example, 1 m and 50 m, respectively. In addition, as illustrated in Fig. 8, the object detection range r3 may be a range in which detection of an object is performed in a third mode of the electronic device 1. Herein, the minimum detection range and the maximum detection range of the object detection range r3 may be, for example, 5 m and 200 m, respectively.

The electronic device 1 according to the one embodiment may transmit the transmission wave in different transmission modes such as the first mode to the third mode described above in each frame of the transmission signal. Fig. 8 illustrates an example of three different transmission modes such as the first mode to the third mode. However, the different transmission modes may be two different transmission modes or may be more than three different transmission modes. In addition, in Fig. 8, the object detection range increases sequentially from the first mode to the third mode. However, the object detection range may decrease sequentially from the first mode to the third mode. In addition, the size of the object detection range does not necessarily change sequentially from the first mode to the third mode.

A relationship between a distance within which an object is detected and the intensity of a reception signal received as the reflected wave R from the object in the electronic device 1 according to the one embodiment is now described.

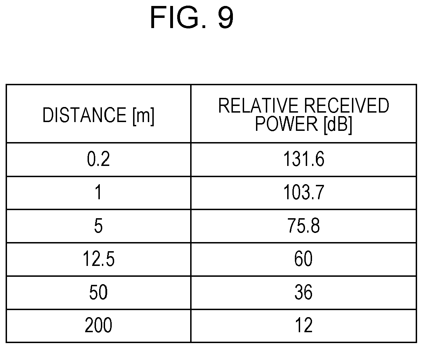

Fig. 9 is a diagram illustrating an example of a relationship between an object detection distance and a relative received power of a reception signal in the electronic device 1 according to the one embodiment. Fig. 9 illustrates an example of a relationship between the object detection distance and the intensity (power) of the reception signal, with respect to a circumstance in which the intensity (power) of the reception signal is 60 dB when the object detection distance is 12.5 m. The electronic device 1 of the present disclosure may use numerical values determined through an experiment or the like instead of the numerical values presented below.

As described above, in general, the signal intensity of the reception signal received as the reflected wave R tends to decrease as the distance to the object to be detected increases. Conversely, the signal intensity of the reception signal received as the reflected wave R tends to increase as the distance to the object to be detected decreases. In the example illustrated in Fig. 9, for example, when the object detection distance is 0.2 m, the relative received power is 131.6 dB. In addition, in the example illustrated in Fig. 9, for example, when the object detection distance is 200 m, the relative received power is 12 dB. Thus, when an object located at a distance of 0.2 m and an object located at a distance of 200 m are to be concurrently detected, the dynamic range of the reception signal is about 120 dB. That is, when such a signal is to be processed, the reception circuit (such as the AD conversion unit 36 and so on illustrated in Fig. 2, for example) is required to support the dynamic range of about 120 dB.

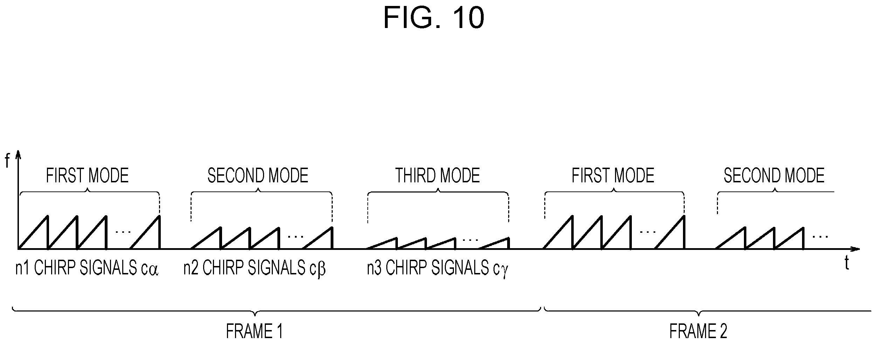

Fig. 10 is a diagram for describing an example in which transmission signals of different modes are set in one frame of the transmission wave T of the electronic device 1 according to the one embodiment.

The control unit 10 of the electronic device 1 according to the one embodiment may perform control such that each frame of the transmission signal includes at least two time sections in which the transmission wave is transmitted in different modes. For example, as illustrated in Fig. 10, the control unit 10 may perform control such that the frame 1 of the transmission signal includes three time sections in which the transmission wave is transmitted in different modes such as the first mode to the third mode.

As illustrated in Fig. 10, the frame 1 of the transmission signal includes time sections of three modes that are the first mode, the second mode, and the third mode. As illustrated in Fig. 10, in the first mode, n1 chirp signals cα are included. In addition, in the second mode, n2 chirp signals cβ are included. In addition, in the third mode, n3 chirp signals cγ are included. As described above, in the first mode to the third mode, different chirp signals (with different waveforms) may be included. In addition, in the first mode to the third mode, different numbers of chirp signals may be included. By setting the temporal change in frequency of the chirp signals transmitted as the transmission signal different as in the first mode to the third mode, the object detection distance and the object detection resolution (detection accuracy) can be changed. In the present disclosure, the frame of the transmission signal is not limited to the three modes and may include any number of time sections such as two time sections or four or more time sections. In addition, the number of chirp signals in each mode may be any number.

As described above, the control unit 10 may perform control such that the transmission wave is transmitted in modes in which temporal changes in frequency of a chirp signal transmitted as the transmission signal are different. In addition, the control unit 10 may perform control such that the transmission wave is transmitted in modes in which resolutions in a range in which an object is to be detected on the basis of the transmission signal and the reception signal are different. In addition, the control unit 10 may perform control such that the transmission wave is transmitted in modes in which the unit numbers of chirp signals (that is, the numbers of chirp signals) transmitted as the transmission signal are different.

Fig. 10 illustrates an example in which a frame 2 and subsequent frames have the same transmission signal arrangement as the frame 1. However, the frame 2 and the subsequent frames may have a transmission signal arrangement different from that of the frame 1. A frame 3 and the subsequent frames may have a transmission signal arrangement different from those of the frames 1 and 2, for example. In Fig. 10, an interval is provided between the first to third modes. However, such an interval may be omitted. In addition, as described above, the number of modes included in each frame illustrated in Fig. 10 is not limited to three, and may be, for example, two, or more than three.

As described above, the control unit 10 of the electronic device 1 according to the one embodiment may perform control such that each frame of the transmission signal includes at least two time sections in which the transmission wave is transmitted in different modes. In this case, the control unit 10 may perform control such that the transmission wave is transmitted in modes in which ranges in which an object is to be detected on the basis of the transmission signal and the reception signal are different.

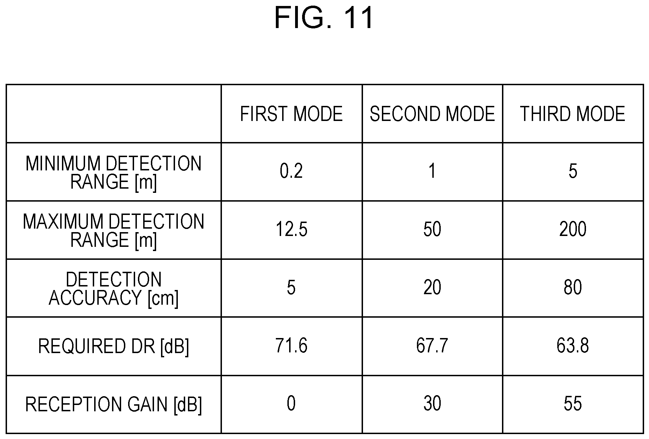

Fig. 11 is a diagram illustrating an example of specifications in respective modes of the electronic device 1 according to the one embodiment. Fig. 11 illustrates, for each mode of the first to third modes, an example of settings of values of the minimum object detection range, the maximum object detection range, the object detection accuracy (resolution), the required dynamic range, and the reception gain.

As illustrated in Fig. 11, in each mode of the first to third modes, the minimum object detection range and the maximum object detection range may be the same as and/or similar to those described in Fig. 8. That is, as illustrated in Fig. 11, in the first mode, the minimum detection range and the maximum detection range may be set to 0.2 m and 12.5 m, respectively. In addition, in the second mode, the minimum detection range and the maximum detection range may be set to 1 m and 50 m, respectively. In addition, in the third mode, the minimum detection range and the maximum detection range may be set to 5 m and 200 m, respectively.

In each mode of the first to third modes illustrated in Fig. 11, the object detection accuracy (resolution) can be determined on the basis of, for example, the maximum detection range and the minimum detection range described above and the number of FFT processing points in the distance FFT processing unit 11. For example, suppose that the number of FFT processing points in the distance FFT processing unit 11 is 256 points. In this case, in the first mode, since a distance of 12.5 m - 0.2 m = 12.3 m is subjected to FFT processing with 256 points, the detection accuracy (resolution) is 12.3 m/256 = about 5 cm. Likewise, in the second mode, the detection accuracy (resolution) can be determined to be 20 cm. In addition, in the third mode, the detection accuracy (resolution) can be determined to be 80 cm.

The dynamic range required in each mode of the first to third modes illustrated in Fig. 11 is discussed next. In Fig. 11, the required dynamic range is simply referred to as a "required DR". The required DR can be determined from relative received powers (see Fig. 9) respectively corresponding to the maximum detection range and the minimum detection range described above.

For example, in the first mode, the relative received power corresponding to the minimum detection range of 0.2 m is 131.6 dB from Fig. 9, and the relative received power corresponding to the maximum detection range of 12.5 m is 60 dB from Fig. 9. The dynamic range of such a signal is 131.6 dB - 60 dB = 71.6 dB. In addition, in the second mode, the relative received power corresponding to the minimum detection range of 1 m is 103.7 dB from Fig. 9, and the relative received power corresponding to the maximum detection range of 50 m is 36 dB from Fig. 9. The dynamic range of such a signal is 103.7 dB - 36 dB = 67.7 dB. In addition, in the third mode, the relative received power corresponding to the minimum detection range of 5 m is 75.8 dB from Fig. 9, and the relative received power corresponding to the maximum detection range of 200 m is 12 dB from Fig. 9. The dynamic range of such a signal is 75.8 dB - 12 dB = 63.8 dB.

As illustrated in Fig. 11, the dynamic range required in each mode of the first to third modes illustrated in Fig. 11 is a level not exceeding 72 dB. However, if the same processing is performed on these signals, the required dynamic range is from 12 dB to 131.6 dB, that is, about 120 dB. Accordingly, in the electronic device 1 according to the one embodiment, the gain adjustment unit 35 may adjust the gain of the reception signal for each of the modes described above.

Specifically, as illustrated in Fig. 11, in the first mode, the gain adjustment unit 35 may adjust the gain of the reception signal by 0 dB, for example. That is, in the first mode, the gain adjustment unit 35 need not increase or decrease the gain of the reception signal, for example. In addition, as illustrated in Fig. 11, in the second mode, the gain adjustment unit 35 may adjust the gain of the reception signal by 30 dB, for example. That is, in the second mode, the gain adjustment unit 35 may increase the gain of the reception signal by 30 dB, for example. In addition, as illustrated in Fig. 11, in the third mode, the gain adjustment unit 35 may adjust the gain of the reception signal by 55 dB, for example. That is, in the third mode, the gain adjustment unit 35 may increase the gain of the reception signal by 55 dB, for example.

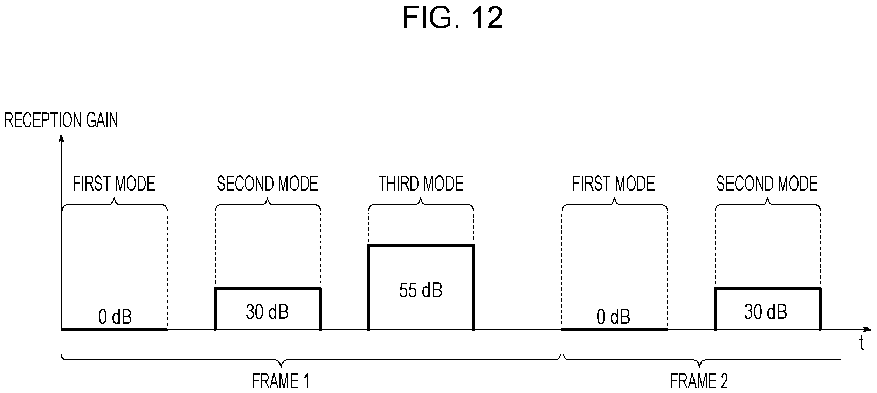

Fig. 12 is a diagram for describing adjustment of the reception gain in the electronic device 1 according to the one embodiment. In modes in each frame illustrated in Fig. 12 may correspond to the respective modes in each frame illustrated in Fig. 10. That is, for the transmission signal transmitted in the first mode illustrated in Fig. 10, the gain adjustment unit 35 may adjust the reception gain by 0 dB as indicated in the first mode in Fig. 12. In addition, for the transmission signal transmitted in the second mode illustrated in Fig. 10, the gain adjustment unit 35 may adjust the reception gain by 30 dB as indicated in the second mode in Fig. 12. In addition, for the transmission signal transmitted in the third mode illustrated in Fig. 10, the gain adjustment unit 35 may adjust the reception gain by 55 dB as indicated in the third mode in Fig. 12.

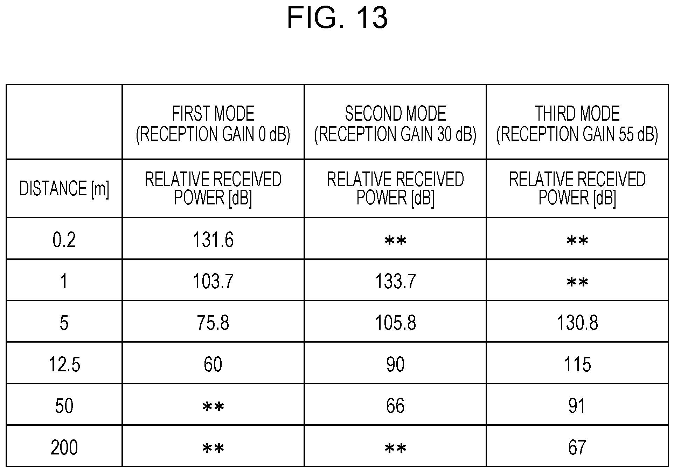

Fig. 13 is a diagram illustrating an example of the relative received power of the reception signal in each mode of the electronic device 1 according to the one embodiment. Fig. 13 is a diagram illustrating the relative intensity (power) of the reception signal corresponding to the object detection distance in each mode of the first to third modes. In Fig. 13, a numerical value obtained by adjusting the reception gain is presented as the relative received power in each mode of the first to third modes. That is, the relative received power illustrated in Fig. 13 is the numerical value resulting from the reception gain control performed by the gain adjustment unit 35 in the above-described manner. In addition, in Fig. 13, a field without any numerical value (field with "**") indicates that no object is to be detected because the distance is not supported in that mode.

As illustrated in Fig. 13, in the first mode, the gain of the reception signal is adjusted by 0 dB. Thus, in the first mode, the relative received power for the distance of 0.2 m is 131.6 dB, and the relative received power for the distance of 12.5 m is 60 dB. In this case, the dynamic range required in the first mode is 71.6 dB from 60 dB to 131.6 dB.

As illustrated in Fig. 13, in the second mode, the gain of the reception signal is adjusted by 30 dB. Thus, in the second mode, the relative received power for the distance of 1 m is 133.7 dB, and the relative received power for the distance of 50 m is 66 dB. In this case, the dynamic range required in the second mode is 67.7 dB from 66 dB to 133.7 dB.

As illustrated in Fig. 13, in the third mode, the gain of the reception signal is adjusted by 55 dB. Thus, in the third mode, the relative received power for the distance of 5 m is 130.8 dB, and the relative received power for the distance of 200 m is 67 dB. In this case, the dynamic range required in the third mode is 63.8 dB from 67 dB to 130.8 dB.

Accordingly, in the electronic device 1 according to the one embodiment, the gain adjustment unit 35 may adjust the gain of the reception signal for each of the modes described above. In addition, the gain adjustment unit 35 may adjust the gain of the reception signal for each mode such that the dynamic range of the reception signal is less than or equal to a predetermined level. For example, as in the example illustrated in Fig. 13, the gain adjustment unit 35 may adjust the gain of the reception signal such that the dynamic range of the reception signal does not exceed 75 dB in each mode.

By adjusting the gain in the manner described above, the required dynamic range can be kept at about 72 dB while the object detection range (distance) can be set to be from 0.2 m to 200 m as illustrated in Fig. 13. As described in the example illustrated in Fig. 9, when objects are to be concurrently detected in the range (distance) from 0.2 m to 200 m, the required dynamic range is about 120 dB. However, in the electronic device 1 according to the one embodiment, the required dynamic range is reduced to about 72 dB as a result of performing the gain adjustment in the manner described above. Thus, the electronic device 1 according to the one embodiment can reduce the cost of the device instead of increasing the cost.

In the example illustrated in Fig. 13, the object detection range (distance) increases sequentially from the first mode to the third mode. In addition, in the example illustrated in Fig. 13, the dynamic range of the reception signal decreases sequentially from the first mode to the third mode. As described above, in the electronic device 1 according to the one embodiment, the gain adjustment unit 35 may adjust the gain of the reception signal for each mode such that the dynamic range of the reception signal decreases as the range (distance) in which an object is to be detected on the basis of the transmission signal and the reception signal increases.

In addition, as illustrated in Fig. 13, the object detection range (distance) in the first mode is from 0.2 m to 12.5 m. The object detection range (distance) in the second mode is from 1 m to 50 m. The object detection range (distance) in the third mode is from 5 m to 200 m. Thus, the object detection ranges (distances) in the respective modes from the first mode to the third mode illustrated in Fig. 13 have overlapping ranges. As described above, in the electronic device 1 according to the one embodiment, the gain adjustment unit 35 may adjust the gain of the reception signal for each mode such that the ranges (distances) in which an object is to be detected on the basis of the transmission signal and the reception signal in the respective modes become redundant. By making the object detection ranges redundant in this manner, false detection or missed detection of an object can be reduced. Therefore, the electronic device 1 according to the one embodiment can improve the object detection accuracy.

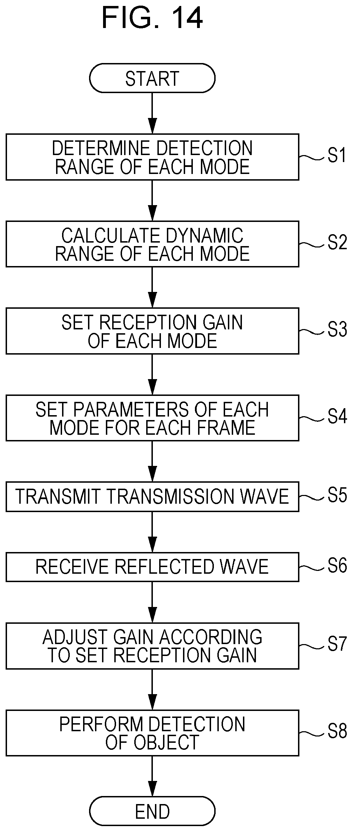

Fig. 14 is a flowchart for describing an operation of the electronic device according to the one embodiment. The flow of the operation of the electronic device according to the one embodiment is described below.

The operation illustrated in Fig. 14 may be started, for example, when the electronic device 1 mounted in the mobility device 100 attempts to detect an object located around the mobility device 100.

In response to the start of the operation illustrated in Fig. 14, the control unit 10 determines the object detection range of each mode (step S1). For example, in step S1, the control unit 10 may set the object detection range of the first mode to be from 0.2 m to 12.5 m as illustrated in Fig. 11. In addition, for example, in step S1, the control unit 10 may set the object detection range of the second mode to be from 1 m to 50 m as illustrated in Fig. 11. In addition, for example, in step S1, the control unit 10 may set the object detection range of the third mode to be from 5 m to 200 m as illustrated in Fig. 11. Such object detection ranges may be stored in advance in the storage unit 40. In step S1, the control unit 10 may determine the object detection ranges of the respective modes on the basis of an operation performed by a driver or the like of the mobility device 100, for example, or may determine the object detection ranges of the respective modes on the basis of an instruction from the control unit 10, the ECU 50, or the like, for example.

The operation in step S1 may be started again after the operation illustrated in Fig. 14 has been performed before, instead of the operation being performed for the first time after the start of the operation illustrated in Fig. 14. If the object detection ranges of the respective modes are already determined by the control unit 10 when step S1 is performed again, the control unit 10 may use the determined object detection ranges.

After determining the object detection range of each mode in step S1, the control unit 10 may calculate the dynamic range of the reception signal in each mode (step S2). For example, in step S2, the control unit 10 may calculate the dynamic range of the first mode to be from 60 dB to 131.6 dB as illustrated in Fig. 11. In addition, for example, in step S2, the control unit 10 may calculate the dynamic range of the second mode to be from 36 dB to 103.7 dB as illustrated in Fig. 11. In addition, for example, in step S2, the control unit 10 may calculate the dynamic range of the third mode to be from 12 dB to 75.8 dB as illustrated in Fig. 11.

In step S2, the control unit 10 may calculate the dynamic ranges of the reception signal in the respective modes on the basis of the correspondences illustrated in Fig. 9, for example. In addition, the correspondences illustrated in Fig. 9 may be calculated by the control unit 10 in step S2 or before or after step S2, or may be stored in advance in the storage unit 40, for example.

After calculating the dynamic ranges in step S2, the control unit 10 sets the gain of the reception signal of each mode (step S3). In step S3, the control unit 10 may set the gain of the reception signal of each mode such that the upper limit and the lower limit of the dynamic range of each mode are between numerical values of a predetermined width.

For example, in step S3, the control unit 10 may set the gain of the reception signal of the first mode to 0 dB such that the dynamic range of the first mode is 71.6 dB from 60 dB to 131.6 dB as illustrated in Fig. 13. In addition, for example, in step S3, the control unit 10 may set the gain of the reception signal of the second mode to 30 dB such that the dynamic range of the second mode is 67.7 dB from 66 dB to 133.7 dB as illustrated in Fig. 13. In addition, for example, in step S3, the control unit 10 may set the gain of the reception signal of the third mode to 55 dB such that the dynamic range of the third mode is 63.8 dB from 67 dB to 130.8 dB as illustrated in Fig. 13.

After setting the gain of each mode in step S3, the control unit 10 sets various parameters in the electronic device 1 for each frame or the like of the transmission wave T in order to detect an object in the object detection range of each mode (step S4).

For example, in step S4, the control unit 10 may set various parameters for each frame or the like of the transmission wave T such that a range among the object detection ranges r1 to r3 in the respective modes illustrated in Fig. 8 is clipped as the object detection range and detection of an object is performed. In step S4, as illustrated in Fig. 10, various parameters may be set for each frame of the transmission wave T, may be set for each part (for example, for each mode, subframe, or the like) constituting a frame, or may be set for each chirp signal. Various parameters set for clipping a detection range such as the object detection range in each mode and performing detection of an object may be stored in the storage unit 40, for example. In this case, in step S4, the control unit 10 may read the various parameters from the storage unit 40 and set the various parameters.

In step S4, the control unit 10 may set various parameters for each frame or the like of the transmission wave T such that the beam of the transmission wave is formed in the direction toward each of the determined object detection ranges. For example, in step S4, the control unit 10 may set various parameters for each frame or the like of the transmission wave T such that the beam of the transmission wave is directed toward the object detection range determined in step S1. The various parameters set for directing the beam of the transmission wave toward the detection range such as each object detection range can be stored in the storage unit 40, for example. In this case, in step S4, the control unit 10 may read the various parameters from the storage unit 40 and set the various parameters. In step S4, the control unit 10 may set the various parameters for each frame or the like of the transmission wave T, for example, in the phase control units 23 or the transmission unit 20.

As described above, in the electronic device 1 according to the one embodiment, the control unit 10 may set, for each frame or the like of the transmission wave T, parameters that define any of the plurality of object detection ranges based on the transmission signal and the reception signal. The control unit 10 may also switch the mode of the radar for each frame or for each unit of processing in a frame from among the modes having different detection ranges and may notify the signal generating unit 21 of the mode of the radar.

After setting the parameters in step S4, the control unit 10 performs control to transmit the transmission wave T from the transmission antennas 25 in accordance with an order of frames or the like of the transmission wave T (step S5). For example, in step S5, the signal generating unit 21 may generate a transmission signal that functions as a radar of each mode, in accordance with an order of frames or the like of the transmission wave T on the basis of the parameters set by the control unit 10. In the case where beamforming of the transmission waves T is performed, in step S5, the phase control units 23 may perform control such that the transmission waves T transmitted from the plurality of transmission antennas 25 form a beam in a predetermined direction in accordance with the order of frames or the like of the transmission waves T. In this case, the phase control units 23 may control the phases of the respective transmission waves T. The phase control unit 23 may perform control so as to direct the beam of the transmission waves T in the direction toward the object detection range determined in step S1 in accordance with the order of frames or the like of the transmission waves T such that the beam covers at least part of the object detection range, for example.

After the transmission wave T is transmitted in step S5, the control unit 10 performs control to receive the reflected wave R from the reception antennas 31 (step S6).

When the reflected wave R is received in step S6, the gain adjustment unit 35 adjusts the gain of the reception signal (step S7). In step S7, the gain adjustment unit 35 may adjust the gain of the reception signal in accordance with the reception gain set in step S3. In addition, in step S7, the control unit 10 may perform control such that the gain adjustment unit 35 adjusts the gain of the reception signal for each mode.

For example, in step S7, at a timing when the reception unit 30 receives the reflected wave of the transmission wave transmitted from the transmission unit 20 in the first mode, the gain adjustment unit 35 may adjust the gain of the reception signal by 0 dB. In addition, for example, in step S7, at a timing when the reception unit 30 receives the reflected wave of the transmission wave transmitted from the transmission unit 20 in the second mode, the gain adjustment unit 35 may adjust the gain of the reception signal by 30 dB. In addition, for example, in step S7, at a timing when the reception unit 30 receives the reflected wave of the transmission wave transmitted from the transmission unit 20 in the third mode, the gain adjustment unit 35 may adjust the gain of the reception signal by 55 dB. In the present disclosure, the gain adjustment unit 35 may use, as the timing for adjusting the gain of the reception signal, any combination of appropriate timings such as a timing before the signal is transmitted from the transmission unit 20 by a predetermined period, a timing when the signal is transmitted from the transmission unit 20, a timing after the signal is transmitted from the transmission unit 20 and before the reception unit 30 receives the reflected wave, and a timing after the reception unit 30 receives the reflected wave of the transmission wave by a predetermined period.

After the gain of the reception signal is adjusted in step S7, the control unit 10 performs detection of an object located around the mobility device 100 (step S8). In step S8, the control unit 10 may perform detection of an object in the object detection range determined in step S1 (clipping of the object detection range). In step S8, the control unit 10 may detect the presence of an object on the basis of an estimation result obtained by at least any of the distance FFT processing unit 11, the velocity FFT processing unit 12, and the angle-of-arrival estimating unit 13.

In the electronic device 1 according to the one embodiment, the control unit 10 may perform, for example, object detection (for example, clustering) processing from angle information, velocity information, and distance information obtained for each of a plurality of different modes of the radar and may calculate average power of points constituting the object. In addition, in the electronic device 1 according to the one embodiment, the control unit 10 may notify an upper-level control CPU such as the ECU 50, for example, of object detection information or point cloud information obtained for each of the plurality of different modes of the radar.

Since detection of an object in step S8 can be performed on the basis of various algorithms or the like by using a known technology of a millimeter wave radar, more detailed description is omitted. After step S8 illustrated in Fig. 14, the control unit 10 may start the processing of step S1 again. In this case, the object detection ranges may be determined in step S1 on the basis of the result of object detection performed in step S8. As described above, in the electronic device 1 according to the one embodiment, the control unit 10 may detect an object that reflects the transmission wave T on the basis of the transmission signal transmitted as the transmission wave T and the reception signal received as the reflected wave R.

As described above, the electronic device 1 according to the one embodiment does not require a wide dynamic range in processing a reception signal, and thus can reduce a possibility of increasing the cost. In addition, by making the object detection ranges redundant, the electronic device 1 according to the one embodiment can reduce false detection or missed detection of an object. Thus, the electronic device 1 according to the one embodiment can reduce the cost of the device instead of increasing the cost and can also improve the target detection accuracy.

Note that the electronic device according to the present disclosure may transmit the transmission wave in different transmission modes in the set mode such as the first to third modes described above, for each chirp signal of the transmission signal or for each combination of any number of chirp signals. In this case, the gain adjustment unit 35 may adjust the gain of the reception signal of the reflected wave in each mode. This electronic device does not require a wide dynamic range in processing the reception signal for each chirp signal of the transmission signal or for each combination of any number of chirp signals. Thus, the electronic device according to the present disclosure can reduce the possibility of increasing the cost. In addition, by making the object detection ranges redundant, the electronic device according to the present disclosure can reduce false detection or missed detection of an object. Thus, this electronic device can reduce the cost of the device instead of increasing the cost and can also improve the target detection accuracy.

While the present disclosure has been described on the basis of the various drawings and the embodiments, it should be noted that a person skilled in the art can easily make various variations or corrections on the basis of the present disclosure. Therefore, it should be noted that these variations or corrections are within the scope of the present disclosure. For example, functions and the like included in each functional unit can be rearranged without causing any logical contradiction. A plurality of functional units or the like may be combined into one or may be divided. The embodiments according to the present disclosure described above are not limited to strict implementation according to the respective embodiments described above, and may be implemented by appropriately combining the features or omitting part thereof. That is, a person skilled in the art can make various variations and corrections to the contents of the present disclosure on the basis of the present disclosure. Accordingly, these variations and corrections are within the scope of the present disclosure. For example, in each embodiment, each functional unit, each means, each step, or the like can be added to another embodiment or replaced with each functional unit, each means, each step, or the like in another embodiment without causing any logical contradiction. In each embodiment, a plurality of functional units, means, steps, or the like may be combined to one or may be divided. In addition, the embodiments according to the present disclosure described above are not limited to strict implementation according to the respective embodiments described above, and may be implemented by appropriately combining the features or omitting part thereof.

The embodiments described above are not limited to implementation as the electronic device 1. For example, the embodiments described above may be implemented as a method for controlling a device such as the electronic device 1. Further, for example, the embodiments described above may be implemented as a program executed by a device such as the electronic device 1.

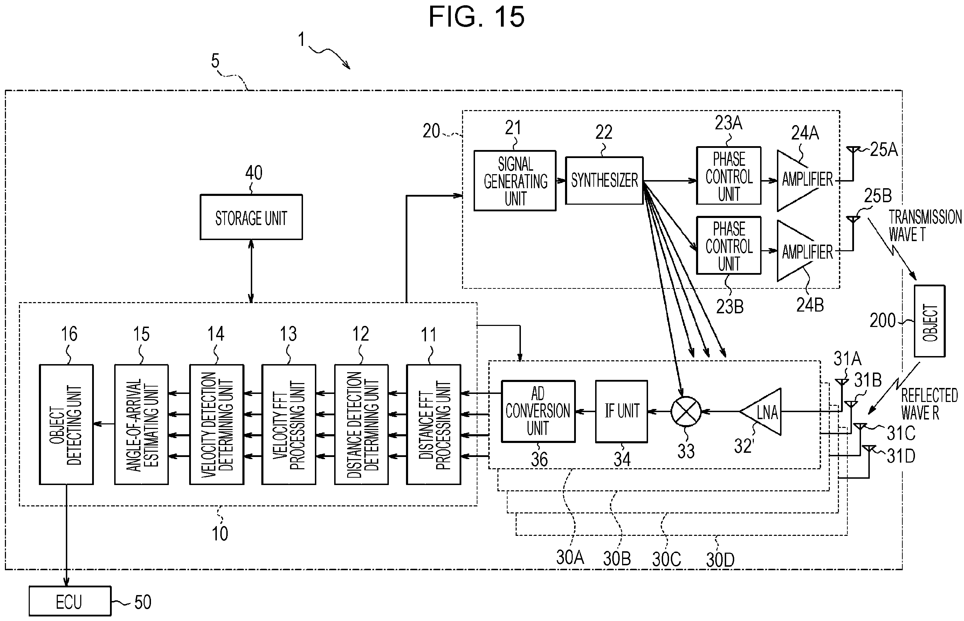

In addition, in the embodiments described above, the description is given on the assumption that the gain adjustment unit 35 adjusts the gain of the reception signal. However, in the electronic device 1 according to the one embodiment, a functional unit other than the gain adjustment unit 35 may adjust the gain of the reception signal. For example, as in the electronic device 1 illustrated in Fig. 15, an LNA 32' may adjust the gain of the reception signal. In this case, as illustrated in Fig. 15, the use of the gain adjustment unit 35 is no longer required. In addition, another functional unit in the reception unit 30 illustrated in Fig. 15 may adjust the gain of the reception signal.

The electronic device 1 according to one embodiment may include, as the minimum configuration, at least part of only one of the sensor 5 and the control unit 10, for example. On the other hand, the electronic device 1 according to the one embodiment may appropriately include at least any of the signal generating unit 21, the synthesizer 22, the phase control units 23, the amplifiers 24, and the transmission antennas 25 illustrated in Fig. 2 in addition to the control unit 10. In addition, the electronic device 1 according to the one embodiment may appropriately include at least any of the reception antenna 31, the LNA 32, the mixer 33, the IF unit 34, and the AD conversion unit 36 instead of or along with the functional units described above. Further, the electronic device 1 according to the one embodiment may include the storage unit 40. As described above, the electronic device 1 according to the one embodiment can employ various configurations. When the electronic device 1 according to the one embodiment is mounted in the mobility device 100, for example, at least any of the functional units described above may be installed at an appropriate place such as the inside the mobility device 100. On the other hand, in one embodiment, for example, at least any of the transmission antenna 25 and the reception antenna 31 may be installed outside the mobility device 100.

### Reference Signs List

- 1: electronic device
- 5: sensor
- 10: control unit
- 11: distance FFT processing unit
- 12: distance detection determining unit
- 13: velocity FFT processing unit
- 14: velocity detection determining unit
- 15: angle-of-arrival estimating unit
- 16: object detecting unit
- 20: transmission unit
- 21: signal generating unit
- 22: synthesizer
- 23: phase control unit
- 24: amplifier
- 25: transmission antenna
- 30: reception unit
- 31: reception antenna
- 32: LNA
- 33: mixer
- 34: IF unit
- 35: gain adjustment unit
- 36: AD conversion unit
- 40: storage unit
- 50: ECU
- 100: mobility device
- 200: object

## Claims

1. An electronic device comprising:
a transmission antenna that transmits a transmission wave;
a reception antenna that receives a reflected wave that is the transmission wave having been reflected;
a control unit that detects an object that reflects the transmission wave, based on a transmission signal transmitted as the transmission wave and a reception signal received as the reflected wave; and
a gain adjustment unit that adjusts a gain of the reception signal, wherein
the control unit performs control to transmit the transmission wave in at least two different modes, and
the gain adjustment unit adjusts the gain of the reception signal for each of the modes.

2. The electronic device according to Claim 1, wherein the gain adjustment unit adjusts the gain of the reception signal for each of the modes such that a dynamic range of the reception signal is less than or equal to a predetermined level.

3. The electronic device according to Claim 1 or 2, wherein the gain adjustment unit adjusts the gain of the reception signal for each of the modes such that a dynamic range of the reception signal decreases as a range in which an object is to be detected based on the transmission signal and the reception signal increases.

4. The electronic device according to any of Claims 1 to 3, wherein the gain adjustment unit adjusts the gain of the reception signal for each of the modes such that ranges in which an object is to be detected based on the transmission signal and the reception signal in the respective modes become redundant.

5. The electronic device according to any of Claims 1 to 4, wherein the control unit performs control such that the transmission wave is transmitted in modes in which ranges in which an object is to be detected based on the transmission signal and the reception signal are different.

6. The electronic device according to any of Claims 1 to 5, wherein the control unit performs control such that the transmission wave is transmitted in modes in which resolutions in ranges in which an object is to be detected based on the transmission signal and the reception signal are different.

7. The electronic device according to any of Claims 1 to 6, wherein the control unit performs control such that the transmission wave is transmitted in modes in which temporal changes in frequency of a chirp signal transmitted as the transmission signal are different.

8. The electronic device according to any of Claims 1 to 7, wherein the control unit performs control such that the transmission wave is transmitted in modes in which the unit numbers of chirp signals transmitted as the transmission signal are different.

9. The electronic device according to Claim 1, wherein the control unit performs control such that each frame of the transmission signal includes at least two time sections in which the transmission wave is transmitted in different modes.

10. A method for controlling an electronic device, comprising:
a step of transmitting a transmission wave from a transmission antenna;
a step of receiving, from a reception antenna, a reflected wave that is the transmission wave having been reflected;
a step of detecting an object that reflects the transmission wave, based on a transmission signal transmitted as the transmission wave and a reception signal received as the reflected wave; and
a step of adjusting a gain of the reception signal, wherein
in the method, control is performed to transmit the transmission wave in at least two different modes, and
in the step of adjusting, the gain of the reception signal is adjusted for each of the modes.

11. A program for causing an electronic device to execute:
a step of transmitting a transmission wave from a transmission antenna;
a step of receiving, from a reception antenna, a reflected wave that is the transmission wave having been reflected;
a step of detecting an object that reflects the transmission wave, based on a transmission signal transmitted as the transmission wave and a reception signal received as the reflected wave; and
a step of adjusting a gain of the reception signal, wherein
the program causes the electronic device to perform a step of performing control to transmit the transmission wave in at least two different modes, and
in the step of adjusting, the gain of the reception signal is adjusted for each of the modes.
